(19) Europäisches Patentamt / European Patent Office / Office européen des brevets

(11) **EP 3 287 500 B1**

(12) **EUROPEAN PATENT SPECIFICATION**

(45) Date of publication and mention of the grant of the patent:
**10.05.2023  Bulletin 2023/19**

(21) Application number: **16783192.4**

(22) Date of filing: **20.04.2016**

(51) International Patent Classification (IPC):
*C09D 5/02* (2006.01)  *C09D 175/04* (2006.01)
*B32B 27/40* (2006.01)  *C09D 129/04* (2006.01)
*C09D 179/02* (2006.01)  *C09D 7/40* (2018.01)
*C08K 3/34* (2006.01)

(52) Cooperative Patent Classification (CPC):
**C09D 175/04; B32B 27/40; C09D 5/022;
C09D 7/61; C09D 7/63; C09D 7/70; C09D 129/04;
C09D 179/02;** C08K 3/346

(86) International application number:
**PCT/JP2016/062514**

(87) International publication number:
**WO 2016/171171 (27.10.2016 Gazette 2016/43)**

(54) **COATING AGENT AND GAS BARRIER FILM**

BESCHICHTUNGSMITTEL UND GASBARRIEREFOLIE

AGENT DE REVÊTEMENT ET FILM BARRIÈRE CONTRE LES GAZ

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **22.04.2015  JP 2015087705
11.09.2015  JP 2015179742**

(43) Date of publication of application:
**28.02.2018  Bulletin 2018/09**

(73) Proprietor: **Toppan Printing Co., Ltd.
Tokyo 110-0016 (JP)**

(72) Inventors:
• **OMURA, Yuki
Tokyo 110-0016 (JP)**
• **KAMINAGA, Junichi
Tokyo 110-0016 (JP)**
• **HOSHI, Sayaka
Tokyo 110-0016 (JP)**

(74) Representative: **TBK
Bavariaring 4-6
80336 München (DE)**

(56) References cited:
**WO-A1-2014/175277  WO-A1-2015/029950
JP-A- 2005 139 435  JP-A- 2011 161 777
JP-A- 2012 210 805  JP-A- 2015 044 943
JP-A- 2015 044 944  US-A1- 2014 370 270**

**Description**

TECHNICAL FIELD

The present invention relates to a coating agent and a gas barrier film.

BACKGROUND ART

Packing materials that are used to pack food, medicinal products, and the like need to have a property of blocking the entrance of moisture, oxygen and other gases that alter the contents (gas barrier property) in order to suppress the alteration, decomposition, and the like of the contents and maintain the functions or properties of the contents.

Therefore, in the related art, packing materials having a gas barrier layer are used as the packing materials.

Hitherto, gas barrier layers have been provided on base materials such as films or paper by sputtering methods, deposition methods, wet coating methods, printing methods, or the like.

In addition, as gas barrier layers, metal foils or metal-deposited films made of metal such as aluminum, water-soluble polymers such as polyvinyl alcohol and ethylene vinyl alcohol copolymers, resin films made of resins such as polyvinylidene chloride, composite films of the water-soluble polymers and inorganic layered minerals, and the like are used (for example, refer to Patent Documents 1 to 5).

However, in spite of the excellent gas barrier property, metal foils or metal-deposited films have a variety of problems in that their opaqueness disables the confirmation of the contents, their poor stretching property causes cracks even when the foils or films are stretched only several percentages and thus degrades the gas barrier property, and the foils or films need to be treated as incombustible substances during disposal after use.

Resin films made of polyvinylidene chloride exhibit a favorable gas barrier property that does not depend on humidity, but the resin films include chlorine and are thus likely to act as generation sources of harmful substances such as dioxin in the case of disposal treatments and the like and tend to be unpopular as packing materials.

Resin films made of water-soluble polymers such as non-chlorine-based polyvinyl alcohol and ethylene-vinyl alcohol copolymers exhibit a favorable gas barrier property in low-humidity atmospheres, but the gas barrier property significantly depends on humidity, and thus there is a defect in that an increase in humidity significantly degrades the gas barrier property.

Resin films made of resins other than polyvinylidene chloride and water-soluble polymers have a poorer gas barrier property compared with resin films of polyvinylidene chloride or resin films of polyvinyl alcohol in low-humidity atmospheres.

Composite films of water-soluble polymers and inorganic layered minerals have more favorable humidity dependency compared with the resin films made of water-soluble polymers, but the effect is not sufficient, and there is a problem with the degradation of adhesiveness to base materials.

As gas barrier films which exhibit a favorable gas barrier property even in high-humidity atmospheres and have excellent adhesiveness to base materials, the following films are proposed.

(1) A gas barrier film which is a film of an aqueous dispersion element including a gas barrier polyurethane resin which has urethane groups and urea groups and in which the concentration of the urethane groups and the concentration of the urea groups are 15% by weight or more, in which a diisocyanate component in the polyurethane resin is constituted of at least one of xylylene diisocyanate and hydrogenated xylylene diisocyanate (Patent Document 6).

(2) A gas barrier film having a coating film including a water-soluble polymer A, a water-soluble or water-dispersible polyester-based urethane resin, and an inorganic layered mineral having an average particle diameter of 5 $\mu$m or less and a thickness of 500 nm or less as principal components formed on at least one surface of a thermoplastic resin base film (Patent Document 7).

In addition, in the gas barrier film (1), the addition of inorganic layered minerals is proposed in order to improve the gas barrier property.

PRIOR ART DOCUMENTS

PATENT DOCUMENTS

[Patent Document 1] Japanese Unexamined Patent Application, First Publication No. 2001-287294
[Patent Document 2] Japanese Unexamined Patent Application, First Publication No. H11-165369
[Patent Document 3] Japanese Unexamined Patent Application, First Publication No. H6-93133
[Patent Document 4] Japanese Unexamined Patent Application, First Publication No. H9-150484
[Patent Document 5] Japanese Patent No. 3764109
[Patent Document 6] Japanese Patent No. 4524463
[Patent Document 7] Japanese Patent No. 3351208

Further, WO 2015/029950 A1 discloses a water-based coating agent for gravure printing, wherein the constituent components mainly consist of a water-based polyurethane resin, a water-soluble polymer, and an inorganic layered mineral, the solids compounding ratio of the water-based polyurethane resin, the water-soluble polymer, and the inorganic layered mineral constituting the total solids being in the range: Water-based polyurethane resin: 5 to 60 mass%; water-soluble polymer: 25 to 80 mass%; inorganic layered mineral: 8 to 20 mass%. JP 2015-044943 A discloses an aqueous coating agent for gravure printing including: an aqueous polyurethane resin; a water-soluble polymer; and an inorganic laminar mineral as major constituents. In the total solid, the solid content compounding ratios are: aqueous polyurethane resin: 50-80 mass%; water-soluble polymer: 5-20 mass%; inorganic laminar mineral: 10-30 mass%. WO 2014/175277 A1 discloses an aqueous coating agent containing an aqueous polyurethane resin, a water-soluble polymer and an inorganic layered mineral as the main components, wherein the solid content ratios relative to the total solid content of the aqueous coating agent are as follows: the aqueous polyurethane resin: 5 to 60 mass%; the water-soluble polymer: 25 to 80 mass%; and the inorganic layered mineral: 8 to 20 mass%.

SUMMARY OF THE INVENTION

PROBLEMS TO BE SOLVED BY THE INVENTION

However, in the gas barrier film (1), it is extremely difficult to satisfy both a favorable gas barrier property and the adhesion strength to other materials or the cohesion strength of coating films which are sufficient as packing materials. For example, in a case in which the gas barrier film does not contain any inorganic layered minerals, the gas barrier property becomes insufficient. In a case in which an inorganic layered mineral is added to the gas barrier film, the gas barrier property improves to a certain extent. However, in order to sufficiently improve the gas barrier property, it is necessary to put in order, distribute, and arrange the inorganic layered mineral in coating films, but the regular distribution and arrangement of the inorganic layered mineral degrades the adhesion strength to other materials or the cohesion strength of coating films.

In the gas barrier film (2), the gas barrier property in high-humidity atmospheres or the adhesiveness between coating films and base films are favorable, but the cohesion strength of coating films is poor. Therefore, in a case in which the gas barrier film is used as a packing material by being attached to other films on coating films, there is a problem in that the lamination strength becomes insufficient. In addition, curing agents are used in order to develop sufficient adhesion strengths to base films, but the addition of curing agents causes reactions to rapidly proceed, and thus there is a problem in that the usable time is short and the performance is unstable.

The present invention has been made in consideration of the above-described circumstances, and an object of the present invention is to provide a coating agent which exhibits an excellent gas barrier property even in high-humidity atmospheres, can be used to form coating films having sufficient adhesion strength to other materials or sufficient coating film cohesion strength as packing materials, and has a long usable time, and a gas barrier film using the same.

MEANS FOR SOLVING THE PROBLEMS

A coating agent according to a first aspect of the present invention is defined in claim 1.

A gas barrier film according to a second aspect of the present invention is defined in claim 3.

A coating agent according to a third aspect of the present invention is defined in claim 4.

A gas barrier film according to a fourth aspect of the present invention is defined in claim 7.

Further beneficial developments are set forth in dependent claims.

Effects of Invention

According to the above-described aspects of the present invention, it is possible to provide a coating agent which exhibits an excellent gas barrier property even in high-humidity atmospheres, can be used to form coating films having sufficient adhesion strength to other materials or sufficient membrane cohesion strength as packing materials, and has a long usable time, and a gas barrier film using the same.

EMBODIMENTS FOR CARRYING OUT THE INVENTION

Hereinafter, coating agents and gas barrier films according to embodiments of the present invention will be described. , Note that the present embodiments are simply specific descriptions for better understanding of the present invention and, unless particularly otherwise described, do not limit the present invention.

<Coating agent>

A coating agent according to a first embodiment of the present invention includes, as principal components: an aqueous polyurethane resin (A), a water-soluble polymer (B), an inorganic layered mineral (C), and a compound (D) having an epoxy group (hereinafter, also referred to as the "epoxy compound").

"Aqueous polyurethane resin (A)"

The aqueous polyurethane resin (A) includes a polyurethane resin having an acid group (hereinafter, also referred to as the "acid group-containing polyurethane resin") and a polyamine compound.
When the coating agent includes the aqueous polyurethane resin (A), the wettability of the coating agent according to the present embodiment to base films formed of a plastic material and the adhesion strength of coating films formed of the coating agent according to the present embodiment to base films formed of a plastic material are excellent. Furthermore, when the aqueous polyurethane resin (A) contains the acid group-containing polyurethane resin and the polyamine compound, an oxygen barrier property that is excellent even in high-humidity atmospheres is developed.
The acid group in the acid group-containing polyurethane resin (anionic self-emulsification-type polyurethane resin) constituting the aqueous polyurethane resin (A) can be bonded to amino groups (primary amino groups, secondary amino groups, tertiary amino groups, and the like) in the polyamine compound constituting the aqueous polyurethane resin (A).
Examples of the acid group include a carboxyl group, a sulfonic acid group, and the like. Generally, the acid group can be neutralized by a neutralizer (base) and may form a salt with a base.
The acid group may be located at the terminal of the acid group-containing polyurethane resin or located at a side chain, but is preferably located at least at a side chain.
The acid value of the acid group-containing polyurethane resin can be selected in a range in which water solubility or water dispersibility can be imparted, and is generally 5 to 100 mgKOH/g, preferably 10 to 70 mgKOH/g, and more preferably 15 to 60 mgKOH/g. In a case in which the acid value of the acid group-containing polyurethane resin is less than the lower limit value of the above-described range (5 mgKOH/g), the water solubility or water dispersibility of the acid group-containing polyurethane resin becomes insufficient, and there is a concern that the uniform dispersibility between aqueous polyurethane resins and other materials or the dispersion stability of the coating agent may degrade. In a case in which the acid value of the acid group-containing polyurethane resin exceeds the upper limit value of the above-described range (100 mgKOH/g), there is a concern that the water resistance or gas barrier property of coating films formed of the coating agent may degrade. When the acid value of the acid group-containing polyurethane resin is in the above-described range (5 to 100 mgKOH/g), it is possible to avoid the degradation of the dispersion stability of the coating agent and the degradation of the water resistance or the gas barrier property.
When the acid value of the acid group-containing polyurethane is 15 to 60 mgKOH/g, crosslinking reactions with polyamines more appropriately occur, and coating films formed of the coating agent develop a particularly excellent oxygen barrier property even in high-humidity atmospheres.
The acid value of the acid group-containing polyurethane resin is measured using a method according to JIS K 0070.
From the viewpoint of the gas barrier property, the sum of the concentration of urethane groups and the concentration of urea groups (urea groups) in the acid group-containing polyurethane resin is preferably 15 mass% or more and more preferably 20 mass% to 60 mass%. In a case in which the sum of the concentration of urethane groups and the concentration of urea groups is less than the lower limit value of the above-described range (15 mass%), there is a concern that the gas barrier property of coating films formed of the coating agent may become insufficient. In a case in which the sum of the concentration of urethane groups and the concentration of urea groups exceeds the upper limit value of the above-described range (60 mass%), there is a concern that coating films formed of the coating agent may become rigid and brittle.
When the sum of the concentration of urethane groups and the concentration of urea groups (urea groups) in the acid group-containing polyurethane resin is in a range of 20 mass% to 60 mass%, a more favorable gas barrier property can be obtained while maintaining the flexibility of coating films formed of the coating agent.
The concentration of urethane groups and the concentration of urea groups refer to the proportion of the molecular weight of an urethane group (59 g/equivalent) or the molecular weight of an urea group (a primary amino group (amino group): 58 g/equivalent and a secondary amino group (imino group): 57 g/equivalent) in the molecular weight of the repeating constituent unit of the polyurethane resin. Note that in a case in which two or more mixtures are used as the acid group-containing polyurethane resin, the concentration of urethane groups and the concentration of urea groups can be computed using the preparation bases of reaction components, that is, the proportions of individual components used as bases.

Generally, the acid group-containing polyurethane resin has at least a rigid unit (a unit constituted of a hydrocarbon ring) and a short chain unit (for example, a unit constituted of a hydrocarbon ring). That is, the repeating constituent unit of the acid group-containing polyurethane resin is, generally, derived from a polyisocyanate component, a polyhydroxy acid component, a polyol component, or a chain extender component (particularly, at least a polyisocyanate component) and includes a hydrocarbon ring (at least one of aromatic and non-aromatic hydrocarbon rings).

The proportion of units constituted of a hydrocarbon ring in the repeating constituent unit of the acid group-containing polyurethane resin is generally 10 mass% to 70 mass%, preferably 15 mass % to 65 mass%, and more preferably 20 mass% to 60 mass%. In a case in which the proportion of units constituted of a hydrocarbon ring in the repeating constituent unit of the acid group-containing polyurethane resin is less than the lower limit value of the above-described range (10 mass%), there is a concern that the gas barrier property of coating films formed of the coating agent may become insufficient. In a case in which the proportion of units constituted of a hydrocarbon ring in the repeating constituent unit of the acid group-containing polyurethane resin exceeds the upper limit value of the above-described range (70 mass%), there is a concern that coating films formed of the coating agent may become rigid and brittle.

When the proportion of units constituted of a hydrocarbon ring in the repeating constituent unit of the acid group-containing polyurethane resin is in a range of 20 mass% to 60 mass%, a more favorable gas barrier property can be obtained while maintaining the flexibility of coating films formed of the coating agent.

The number-average molecular weight of the acid group-containing polyurethane resin can be appropriately selected and is preferably 800 to 1,000,000, more preferably 800 to 200,000, and still more preferably 800 to 100,000. In a case in which the number-average molecular weight of the acid group-containing polyurethane resin exceeds the upper limit value of the above-described range (1,000,000), the viscosity of the coating agent increases, which is not preferable. In a case in which the number-average molecular weight of the acid group-containing polyurethane resin is less than the lower limit value of the above-described range (800), there is a concern that the gas barrier property of coating films formed of the coating agent may become insufficient.

When the number-average molecular weight of the acid group-containing polyurethane resin is in a range of 800 to 100,000, it is possible to suppress the viscosity of the coating agent at a low level while maintaining the gas barrier property, and thus the application suitability further improves.

The number-average molecular weight of the acid group-containing polyurethane resin is a standard polystyrene-equivalent value measured by gel permeation chromatography (GPC).

The acid group-containing polyurethane resin may be crystalline in order to enhance the gas barrier property.

The glass transition temperature of the acid group-containing polyurethane resin is preferably 100°C or higher, more preferably 110°C or higher, and still more preferably 120°C or higher. In a case in which the glass transition temperature of the acid group-containing polyurethane resin is lower than 100°C, there is a concern that the gas barrier property of coating films formed of the coating agent may become insufficient.

When the glass transition temperature of the acid group-containing polyurethane resin is 120°C or higher, it is possible to form coating films that are particularly excellent in terms of the gas barrier property.

The upper limit of the glass transition temperature of the acid group-containing polyurethane resin is 200°C or lower, furthermore, 180°C or lower, and furthermore, approximately 150°C or lower. Substantially, it is rarely possible for the acid group-containing polyurethane resin satisfying the preferred ranges of the respective items described above to have a glass transition temperature that is higher than the above-described upper limit value (200°C).

When the upper limit of the glass transition temperature of the acid group-containing polyurethane resin is 150°C or lower, it is possible to form coating films that are particularly excellent in terms of the flexibility.

Therefore, the glass transition temperature of the acid group-containing polyurethane resin is preferably 100°C to 200°C, more preferably 110°C to 180°C, and still more preferably 120°C to 150°C.

The glass transition temperature of the acid group-containing polyurethane resin is measured by differential scanning calorimetry (DSC).

The gas barrier property is developed by bonding the acid group in the acid group-containing polyurethane resin and the polyamine compound, as a crosslinking agent, in the aqueous polyurethane resin (A).

The polyamine compound constituting the aqueous polyurethane resin (A) is not particularly limited as long as the polyamine compound is a compound which is bonded to acid groups and is capable of improving the gas barrier property, and a variety of compounds having two or more basic nitrogen atoms can be used.

The basic nitrogen atom is a nitrogen atom capable of being bonded to the acid group in the acid group-containing polyurethane resin, and examples thereof include nitrogen atoms in amino groups such as a primary amino group, a secondary amino group, and a tertiary amino group.

The bond between the polyamine compound and the acid group in the acid group-containing polyurethane resin may be an ionic bond (for example, the ionic bond between a tertiary amino group and a carboxyl group) or a covalent bond (for example, an amide bond or the like).

The polyamine compound is preferably a polyamine compound having at least one amino group selected from the group consisting of primary amino groups, secondary amino groups, and tertiary amino groups.

Specific examples of the polyamine compound include alkylene diamines, polyalkylene polyamines, and the like. Examples of the alkylene diamines include C2-10 alkylene diamines such as ethylenediamine, 1,2-propylene diamine, 1,3-propylene diamine, 1,4-butanediamine, and 1,6-hexamethylenediamine and the like. Examples of the polyalkylene polyamines include tetraalkylene polyamine, furthermore, silicon compounds having a plurality of basic nitrogen atoms (including a nitrogen atom such as an amino group) (silane coupling agents and the like), and the like. Examples of the silicon compound include 2-[N-(2-aminoethyl)amino]ethyltrimethoxysilane, 3-[N-(2-aminoethyl)amine]propyltriethoxysilane, and the like.

The amine value of the polyamine compound is preferably 100 to 1900 mgKOH/g, more preferably 150 to 1900 mgKOH/g, still more preferably 200 to 1900 mgKOH/g, particularly preferably 200 to 1700 mgKOH/g, and most preferably 300 to 1500 mgKOH/g. When the amine value of the polyamine compound is the lower limit value of the above-described range (100 mgKOH/g) or more, the gas barrier property of the aqueous polyurethane resin (A) is excellent. When the amine value of the polyamine compound is the upper limit value of the above-described range (1900 mgKOH/g) or less, the water dispersion stability of the aqueous polyurethane resin is excellent.

When the amine value of the polyamine compound is 300 to 1500 mgKOH/g, crosslinking reactions with the acid group-containing polyurethane are more appropriately caused, and coating films formed of the coating agent develop a particularly excellent oxygen barrier property even in high-humidity atmospheres.

The amine value of the polyamine compound is measured by the following method.

[Method for measuring amine values]

A specimen is weighed to 0.5 to 2 g (the amount of the specimen is represented by S g). Neutral ethanol (BDG neutral) (30 g) is added to and dissolved in the weighed specimen. As an indicator, bromophenol Blue is added to the obtained solution, and titration is carried out using 0.2 mol/L of an ethanolic hydrochloric acid solution (titer f). A point in time at which the color of the solution turns into yellow from green is considered as the end point, and the amine value is obtained using the titration amount (AmL) at this time and Calculation Equation 1.

Calculation Equation 1:

$$\text{Amine value} = A \times f \times 0.2 \times 56.108 / S \ [\text{mgKOH/g}]$$

In the aqueous polyurethane resin (A), the content of the polyamine compound is preferably an amount at which the molar ratio of the acid groups in the acid group-containing polyurethane resin to the basic nitrogen atoms in the polyamine compound (acid groups/basic nitrogen atoms) is 10/1 to 0.1/1 and more preferably an amount at which the molar ratio is 5/1 to 0.2/1. When the acid groups/basic nitrogen atoms is in the above-described range (10/1 to 0.1/1), crosslinking reactions between the acid groups in the acid group-containing polyurethane and the polyamine compound are appropriately caused, and coating films formed of the coating agent develop an excellent oxygen barrier property even in high-humidity atmospheres.

When the groups/basic nitrogen atoms is 5/1 to 0.2/1, crosslinking reactions between the acid groups in the acid group-containing polyurethane and the polyamine compound are appropriately caused in particular, and coating films formed of the coating agent develop a particularly excellent oxygen barrier property even in high-humidity atmospheres.

The aqueous polyurethane resin (A) is generally formed in a state of being dissolved or dispersed in an aqueous medium.

Examples of the aqueous medium include water, water-soluble or hydrophilic organic solvents, and mixtures thereof. The aqueous medium generally refers to water or a medium including water as a principal component. The content of water in the aqueous medium is preferably 70 mass% or more and more preferably 80 mass% or more.

When the content of water in the aqueous medium is 70 mass% or more, the dispersion stability of the aqueous polyurethane resin (A) is excellent, and, when the content is 80 mass% or more, the water-based polyurethane resin (A) obtains particularly excellent dispersion stability and stable long-term performance.

Examples of the water-soluble or hydrophilic organic solvents include alcohols such as methanol, ethanol, and isopropanol; ketones such as acetone and methyl ethyl ketone; ethers such as tetrahydrofuran; cellosolves; carbitols;

nitriles such as acetonitrile; and the like.

The aqueous medium may or may not include a neutralizer (base) that neutralizes the acid groups. Generally, a neutralizer is included in the aqueous medium.

The aqueous polyurethane resin (A) may have a form of an aqueous solution in which a polyurethane resin is dissolved in the aqueous medium or a form of a water dispersion element in which a polyurethane resin is dispersed in the aqueous medium.

In the water dispersion element, the average particle diameter of dispersed particles (polyurethane resin particles) is not particularly limited, but is preferably 20 nm to 500 nm, more preferably 25 nm to 300 nm, and still more preferably 30 nm to 200 nm. In a case in which the average particle diameter of dispersed particles exceeds the upper limit value of the above-described range (500 nm), there is a concern that the uniform dispersibility between the dispersed particles and other materials, the dispersion stability of the coating agent may degrade, and the gas barrier property of coating films formed of the coating agent may become insufficient.

In a case in which the average particle diameter of the dispersed particles is less than the lower limit value of the above-described range (20 nm), it is not possible to expect an effect of further improving the dispersion stability of the coating agent or the gas barrier property of coating films formed of the coating agent. In addition, it is substantially difficult to obtain the above-described dispersion element.

When the average particle diameter of the aqueous polyurethane resin (A) is 30 nm to 200 nm, the dispersion stability of the coating agent is favorable, and coating films having an excellent gas barrier property and, furthermore, an excellent appearance transparency can be formed.

The average particle diameter is a value measured using a fiber-optics particle analyzer with auto-sampler (manufactured by Otsuka Electronics Co., Ltd., FPAR-10) in a state of a concentration of the solid contents of 0.03 to 0.3 mass% (diluted with water).

As the aqueous polyurethane resin (A), commercially available compounds may be used or compounds manufactured using well-known manufacturing methods may be used.

The method for manufacturing the aqueous polyurethane resin (A) is not particularly limited, and ordinary techniques for turning polyurethane resins to be aqueous such as an acetone method or a prepolymer method are used. In urethanization reactions, urethanization catalysts such as amine-based catalysts, tin-based catalysts, or lead-based catalysts may be used as necessary.

For example, the acid group-containing polyurethane resin can be prepared by reacting a polyisocyanate compound, a polyhydroxy acid, and, as necessary, at least one of a polyol component and a chain extender component in an inert organic solvent such as ketones such as acetone, ethers such as tetrahydrofuran, and nitriles such as acetonitrile. More specifically, a prepolymer having an isocyanate group at the terminal is obtained by reacting a polyisocyanate compound, a polyhydroxy acid, and a polyol component in an inert organic solvent (particularly, a hydrophilic or water-soluble organic solvent), the prepolymer is neutralized with a neutralizer and dissolved in an aqueous medium or is dispersed and then reacted with a chain extender component added so as to remove the organic solvent, whereby an aqueous solution or water dispersion element of the acid group-containing polyurethane resin can be prepared.

A polyamine compound is added to the aqueous solution or water dispersion element of the acid group-containing polyurethane resin obtained as described above and is heated as necessary, whereby the aqueous polyurethane resin (A) in a form of an aqueous solution or a water dispersion element can be prepared. In the case of heating, the heating temperature is preferably 30°C to 60°C.

"Water-soluble polymer (B)"

The "water-soluble polymer" refers to a polymer that is soluble in water. Solution mentioned herein refers to a state in which polymers as a solute are dispersed in water as a solvent at a molecular chain level and form a homogeneous system. More specifically, solution refers to a state in which the intermolecular force between a polymer chain and a water molecule becomes stronger than the intermolecular force between the molecular chains of a polymer chain, the entanglement of polymer chains is dissociated, and the polymer chains are uniformly dispersed in water.

The water-soluble polymer (B) is not particularly limited as long as the water-soluble polymer is a compound capable of intruding between the unit crystal layers of the inorganic layered mineral (C) described below and being coordinated (intercalated) to the inorganic layered mineral.

Specific examples of the water-soluble polymer (B) include polyvinyl alcohol resins such as polyvinyl alcohol and derivatives thereof; vinyl-based copolymers such as polyvinyl pyrrolidone, polyacrylic acid, polymethacrylic acid, esters thereof, salts thereof, copolymers thereof, polyhydroxyethyl methacrylate, and copolymers thereof; cellulose derivatives such as carboxymethyl cellulose and hydroxyethyl cellulose; starches such as oxidized starch, etherified starch, and dextrin; copolymerized polyesters having a polar group such as sulfoisophthalic acid; urethane-based polymers, functional group-modified polymers in which the carboxyl groups of a variety of the polymers described above are modified, and the like.

When the coating film cohesion strength is taken into account, the degree of polymerization of the water-soluble polymer (B) is preferably 200 or more.

The number of types of the water-soluble polymer (B) in the coating agent may be one or more.

The water-soluble polymer (B) preferably includes at least one polyvinyl alcohol resin selected from the group consisting of polyvinyl alcohol-based polymers and derivatives of polyvinyl alcohol-based polymers and particularly preferably includes a polyvinyl alcohol resin having a degree of saponification of 95% or more and a degree of polymerization of 300 or more. The degree of polymerization of the polyvinyl alcohol resin is preferably 300 to 2400 and particularly preferably 450 to 2000.

As the degree of saponification or the degree of polymerization increases, the hygroscopic swellability of the polyvinyl alcohol resin becomes poorer, and a more favorable gas barrier property is exhibited. When the degree of saponification of the polyvinyl alcohol resin is less than 95%, there is a concern that a sufficient gas barrier property cannot be obtained. In addition, when the degree of polymerization of the polyvinyl alcohol resin is less than 300, there is a concern that the gas barrier property and the coating film cohesion strength may degrade. On the other hand, in a case in which the degree of polymerization exceeds 2400, the viscosity of the coating agent increases, it is difficult to uniformly mix the coating agent with other components, and there is a concern that degradation of the gas barrier property or the adhesion strength may be caused.

When the degree of polymerization of the polyvinyl alcohol resin is 450 to 2000, the gas barrier property and the coating film cohesion strength are excellent, and the viscosity of the coating agent can also be decreased, and thus the application suitability further improves.

"Inorganic layered mineral (C)"

The "inorganic layered mineral" refers to an inorganic compound in which extremely thin unit crystal layers are overlaid with each other so as to form one layered particle.

The inorganic layered mineral (C) is preferably a compound that swells and/or cleaves in water, and, among these compounds, clay compounds having swellability in water are particularly preferred. More specifically, the inorganic layered mineral (C) is preferably a clay compound which coordinates water between extremely thin unit crystal layers and has a property of water absorption and/or swelling. The above-described clay compound is generally a compound in which layers in which $Si^{4+}$ is coordinated to $O^{2-}$ and a tetrahedral structure is constituted and layers in which $Al^{3+}$, $Mg^{2+}$, $Fe^{2+}$, $Fe^{3+}$, and the like are coordinated to $O^{2-}$ and $OH^-$ and an octahedral structure is constituted are bonded to each other in a ratio of 1/1 or 2/1 and are overlaid with each other, thereby forming a layered structure. This clay compound may be a natural compound or a synthesized compound.

Typical examples of the inorganic layered mineral (C) include hydrous silicates such as phyllosilicate minerals, and examples thereof include kaolinite-based clays minerals such as halloysite, kaolinite, endelite, dickite, and nacrite; antigorite-based clay minerals such as antigorite and chrysotile; smectite-based clay minerals such as montmorillonite, beidellite, nontronite, saponite, hectorite, sauconite, and stevensite; vermiculite-based clay minerals such as vermiculite; mica or mica-based clay minerals such as muscovite, phlogopite, margarite, tetrasilicic mica, and teniolite; and the like. These inorganic layered minerals (C) can be used singly or two or more inorganic layered minerals can be used in combination.

Among these inorganic layered minerals (C), smectite-based clay minerals such as montmorillonite and mica-based clay minerals such as water-swellable mica are particularly preferred.

Regarding the size of the inorganic layered mineral (C), it is preferable that the average particle diameter be 10 $\mu$m or less and the thickness be 500 nm or less. When the average particle diameter and the thickness are respectively the above-described upper limit values (10 $\mu$m for the average particle diameter and 500 nm for the thickness) or less, it becomes easy for the inorganic layered mineral (C) to be uniformly arrayed in coating films formed of the coating agent, and the gas barrier property and the coating film cohesion strength increases.

The inorganic layered mineral (C) particularly preferably includes at least water-swellable synthetic mica having an average particle diameter of 1 to 10 $\mu$m and a thickness of 10 to 100 nm. The water-swellable synthetic mica has a high miscibility with the aqueous polyurethane resin (A) and the water-soluble polymer (B) and contains fewer impurities than natural mica. Therefore, in a case in which water-swellable synthetic mica is used as the inorganic layered mineral (C), the degradation of the gas barrier property or a decrease in the coating film cohesion force arising from impurities is not easily caused. In addition, water-swellable synthetic mica has fluorine atoms in the crystal structure and thus also contributes to the humidity dependency of the gas barrier property of coating films formed of the coating agent being suppressed at a low level. Additionally, water-swellable synthetic mica has a higher aspect ratio than other water-swellable inorganic layered minerals and thus causes a labyrinth effect to more effectively work and contributes to the particularly favorable development of the gas barrier property of coating films formed of the coating agent.

In a case in which the average particle diameter is less than 1 $\mu$m, the gas barrier property of coating films degrades. In a case in which the average particle diameter is more than 10 $\mu$m, the cohesion strength of coating films decreases, and additionally, appearance unevenness is easily caused. For particles having an average particle diameter of 1 $\mu$m or more and a thickness of 10 nm or less, it is difficult to maintain the shape, and substantially, it is not easy to use such particles. In a case in which the thickness is more than 500 nm, uniform application is not possible, and the gas barrier property degrades.

"Epoxy compound (D)"

The epoxy compound (D) can be used without any particular limitation as long as the epoxy compound is a compound having an epoxy group. For example, the epoxy compound may be a monofunctional epoxy compound having one epoxy group or a multifunctional epoxy compound having two or more epoxy groups. In addition, a combination thereof may be used.

Examples of the monofunctional epoxy compound include silane coupling agents having an epoxy group such as 2-(3,4-epoxycyclohexyl)ethyltrimethoxysilane, 3-glycidoxypropyltrimethoxysilane, 3-glycidoxypropyltriethoxysilane, 3 -glycidoxypropylm ethyl dimethoxysilane, and 3-glycidoxypropylethyldiethoxysilane. Examples of the monofunctional epoxy compound other than the silane coupling agents having an epoxy group include phenyl glycidyl ether, 2-ethylhexyl glycidyl ether, ethyl diethylene glycol glycidyl ether, dicyclopentadiene glycidyl ether, and 2-hydroxyethyl glycidyl ether. These monofunctional epoxy compounds may be used singly or two or more monofunctional epoxy compounds may be used in combination.

Examples of the multifunctional epoxy compound include hydroquinone diglycidyl ether, resorcinol diglycidyl ether, ethylene glycol diglycidyl ether, polyethylene glycol diglycidyl ether, cyclohexene diol diglycidyl ether, cyclohexane dimethanol diglycidyl ether, dicyclopentadiene diol diglycidyl ether, sorbitol polyglycidyl ether, polyglycerol polyglycidyl ether, trimethylolpropane triglycidyl ether, pentaerythritol tetraglycidyl ether, phenol novolac-type epoxy resins, cresol novolac-type epoxy resins, epoxidized polybutadiene, and the like. These multifunctional epoxy compounds may be used singly or two or more multifunctional epoxy compounds may be used in combination.

The epoxy compound (D) is preferably the silane coupling agent having an epoxy group or the multifunctional epoxy compound since it is possible to form a complicated and strong crosslinking structure.

The multifunctional epoxy compound is preferably a tri- or higher-functional epoxy compound since it is possible to form a complicated and strong crosslinking structure.

The epoxy equivalent of the epoxy compound (D) is preferably 300 g/eq or less and more preferably 250 g/eq or less. When the epoxy equivalent is the upper limit value of the above-described range (300 g/eq) or less, a high crosslinking density can be obtained.

When the epoxy equivalent is 250 g/ or less, coating films which are crosslinked at a higher density and have strong adhesiveness can be obtained.

The epoxy compound (D) is preferably a compound not having an isocyanate group. In a case in which the epoxy compound (D) has an isocyanate group, rapid reactions with components in the coating agent are caused, and there is a concern that the usable time may be shortened.

The epoxy compound (D) is water-soluble. When the epoxy compound (D) is water-soluble, it is possible to favorably mix the epoxy compound (D) and other components, and consequently, coating films having a favorable barrier property in which cissing or unevenness is not caused can be obtained.

The water solubility ratio of the epoxy compound (D) at 25°C is 60 mass% or more, and still more preferably 70 mass% or more. The upper limit of the water solubility ratio is not particularly limited and may be 100 mass%. When the water solubility ratio is 50 mass% or more, it is possible to more favorably mix the epoxy compound (D) and other components, and consequently, coating films having a favorable barrier property in which cissing or unevenness is not caused can be obtained.

When the water solubility ratio of the epoxy compound is in accordance with the present invention, i.e. 60 mass% or more, in addition to the favorable barrier property, highly transparent coating films having no unevenness can be obtained, and, when the water solubility ratio is 70 mass% or more, particularly highly transparent coating films can be obtained.

The water solubility ratio refers to a value obtained by expressing in percentage the amount (parts by mass) of the epoxy compound (D) that is dispersed or dissolved and thus moves into water when 10 parts by mass of the epoxy compound is added to 90 parts by mass of water and is measured using the following method.

(Method for measuring water solubility ratio)

Water (90 g) and the epoxy compound (D) (10 g) are injected into a separating funnel, are stirred for five minutes, and are left to stand for 20 minutes. After that, the epoxy compound (D) that does not move into water (that is not dissolved in water and is phase-separated from water) is collected, the mass (g) of the epoxy compound (D) that does not move into water is measured, and the water solubility ratio (%) is computed using the following equation.

$$\text{Water solubility ratio}=[(X-Y)/X]\times100$$

Here, X represents the mass of the epoxy compound (D) injected into the separating funnel (=10 g), and Y represents the mass (g) of the epoxy compound (D) collected from the separating funnel (not dissolved in water and phase-separated from water).

Generally, the coating agent according to the present embodiment includes the aqueous medium described above.

The coating agent according to the present embodiment may further include a variety of additives as necessary as long as the gas barrier property or the strength suitable for laminated films for packing is not impaired.

Examples of the additives include an antioxidant, a weathering agent, a thermal stabilizer, a lubricant, a crystal nucleus agent, an ultraviolet absorbent, a plasticizer, an antistatic agent, a coloring agent, a filler, a surfactant, and the like.

"Content fractions of individual components"

In the coating agent, the mass ratio of the aqueous polyurethane resin (A) to the water-soluble polymer (B) in the solid content (aqueous polyurethane resin (A)/water-soluble polymer (B)) is preferably 85/15 to 10/90, more preferably 75/25 to 20/80, and particularly preferably 70/30 to 25/75.

In a case in which the aqueous polyurethane resin (A)/water-soluble polymer (B) is more than 85/15, there is a concern that unevenness may be caused during the application of the coating agent. Unevenness during the application of the coating agent leads to the deterioration of appearances or the degradation of the barrier property. In a case in which the aqueous polyurethane resin (A)/water-soluble polymer (B) is less than 10/90, the wettability to base films deteriorates, cissing and unevenness are easily caused during application, and there is a concern that the generation of cissing and unevenness may degrade the barrier property. When the aqueous polyurethane resin (A)/water-soluble polymer (B) is in a predetermined range (85/15 to 10/90), the wettability of the coating agent to base films is favorable, it is possible to evenly apply the coating agent, and coating films having a favorable appearance or barrier property can be formed.

When the aqueous polyurethane resin (A)/water-soluble polymer (B) is 75/25 to 20/80, highly transparent coating films having a favorable barrier property and, furthermore, no unevenness can be obtained, and, when the aqueous polyurethane resin (A)/water-soluble polymer (B) is 70/30 to 25/75, particularly highly transparent coating films can be obtained.

The content (solid content) of the inorganic layered mineral (C) in the coating agent is preferably 5 mass% or more and 60 mass% or less, more preferably 7 mass% or more and 45 mass% or less, and particularly preferably 10 mass% or more and 30 mass% or less of the total solid content in the coating agent. When the content of the inorganic layered mineral (C) is in the above-described range (5 mass% or more and 60 mass% or less), it is possible to effectively exhibit the barrier property in high-humidity environments while maintaining the cohesion strength of coating films formed of the coating agent.

When the content of the inorganic layered mineral (C) is 7 mass% or more and 45 mass% or less, the balance between the coating film cohesion strength and the barrier property in high-humidity environments is superior. When the content of the inorganic layered mineral (C) is 10 mass% or more and 30 mass% or less, the balance between the membrane cohesion strength and the barrier property in high-humidity environments is particularly excellent.

The content (solid content) of the epoxy compound (D) in the coating agent is preferably 0.5 mass% or more and 30 mass% or less, more preferably 1 mass% or more and 25 mass% or less, and particularly preferably 3 mass% or more and 20 mass% or less of the total solid content in the coating agent. When the content of the epoxy compound (D) is in the above-described range (0.5 mass% or more and 30 mass% or less), it is possible to sufficiently enhance the cohesive force of coating films formed of the coating agent and the adhesion strength to base films while maintaining favorable wettability to base films.

When the content (solid content) of the epoxy compound (D) in the coating agent is 1 mass% or more and 25 mass% or less, the balance between the barrier property and cohesive force of coating films formed of the coating agent and the adhesion strength to base films is superior. When the content (solid content) of the epoxy compound (D) in the coating agent is 3 mass% or more and 20 mass% or less, the balance between the barrier property and cohesive force of coating films formed of the coating agent and the adhesion strength to base films is particularly excellent.

The total content (solid content) of the aqueous polyurethane resin (A), the water-soluble polymer (B), the inorganic layered mineral (C), and the epoxy compound (D) in the coating agent is preferably 85 mass% or more, more preferably 90 mass% or more, and particularly preferably 95 mass% or more of the total solid content in the coating agent. The upper limit of the total content is not particularly limited and may be 100 mass%.

The viscosity of the coating agent at 23°C is preferably 10 mPa·s to 80 mPa·s and more preferably 10 mPa·s to 50 mPa·s.

When the viscosity is in a range of 10 mPa·s to 80 mPa·s, coating agents having favorable applicability in which cissing or unevenness is not caused are obtained. When the viscosity is in a range of 10 mPa·s to 50 mPa·s, flat coating films that are uneven only to a small extent can be formed.

The viscosity is a value measured using an E-type viscometer.

The coating agent according to the present embodiment can be prepared by mixing the aqueous polyurethane resin (A), the water-soluble polymer (B), the inorganic layered mineral (C), the epoxy compound (D), if necessary, additives, an additional aqueous medium, and the like. The mixing order of the respective components is not particularly limited.

The epoxy compound (D) may be mixed together with other components or be added immediately before the application of the coating agent to base films.

"Exerting effects"

The coating agent according to the present embodiment includes the aqueous polyurethane resin (A) containing the polyurethane resin having acid groups and the polyamine compound, the water-soluble polymer (B), the inorganic layered mineral (C), and the epoxy compound (D), and thus it is possible to form coating films exhibiting an excellent gas barrier property even in high-humidity atmospheres. In addition, the coating films are excellent in terms of the adhesion strength or coating film cohesion strength to other materials (for example, base films or thermally fused layers described below). Therefore, when the coating film and other films are attached to each other so as to produce packing materials, sufficient lamination strength can be obtained.

Therefore, when gas barrier films having coating films formed of the coating agent according to the present embodiment are used as packing materials, it is possible to enhance the quality-maintaining property of contents.

It is considered that the epoxy group reacts with hydroxyl groups in the aqueous polyurethane resin (A) or the water-soluble polymer (B) and thus exhibits favorable adhesiveness to base films formed of plastic materials. In addition, it is considered that reaction products of the aqueous polyurethane resin (A), the water-soluble polymer (B), and the epoxy compound (D) are strong and capable of improving the cohesion strength of coating films formed of the coating agent.

Furthermore, the coating agent according to the present embodiment has a long usable time.

In the conventional art, curing agents having isocyanate groups are frequently used in order to exhibit adhesion strength between coating films formed of coating agents including aqueous polyurethane resins as a principal component and base films. However, in a case in which a curing agent having isocyanate groups is used, the coating agent needs to be a two-liquid-type coating agent that is added immediately before the application since the usable time after the addition of the curing agent to the coating agent is short.

The epoxy group slowly reacts in the coating agent, and a majority of the epoxy compound (D) reacts after the application of the coating agent. Therefore, it is considered that the usable time of the coating agent after the addition of the epoxy compound (D) is long.

Therefore, even in a case in which the coating agent according to the present embodiment is a one-liquid-type coating agent, the performance of gas barrier films to be obtained is not easily affected by the time taken from the preparation of the coating agent to the formation of coating films, and gas barrier films having favorable performance stability can be manufactured. Therefore, it is possible to stabilize the performance of coating films formed of the coating agent or simplify blending facilities.

<Gas barrier film>

A gas barrier film according to a second embodiment of the present invention includes a base film formed of a plastic material and a coating film which is laminated on at least one surface of the base film and is formed of the coating agent according to the first embodiment of the present invention.

Examples of the plastic material constituting the base film include olefin-based resins such as polyethylene, polypropylene, and poly C2-10 olefins such as propylene-ethylene copolymers; polyester-based resins such as polyethylene terephthalate and polybutylene terephthalate; polyamide-based resins such as aliphatic polyamides such as nylon 6 and nylon 66 and aromatic polyamides such as polymetaxylylene adipamide; vinyl-based resins such as polystyrene, polyvinyl acetate, ethylene-vinyl acetate copolymers, polyvinyl alcohol, and ethylene-vinyl alcohol copolymers; acrylic resins such as homo or copolymers of (meth)acrylic monomers such as polymethyl methacrylate and polyacrylonitrile; cellophane, and the like. These resins can be used singly or two or more resins can be used in combination.

Examples of the base film include monolayer films constituted of a single resin, monolayer or laminated films for which a plurality of resins is used, and the like. In addition, laminated base materials obtained by laminating the above-described resin on another base material (metal, wood, paper, ceramic, or the like) may be used.

The base film is preferably a polyolefin-based resin film (particularly, a polypropylene film or the like), a polyester-based resin film (particularly, a polyethylene terephthalate-based resin film), a polyamide-based resin film (particularly, a nylon film), or the like.

The base film may be a non-stretched film or a monoaxial or biaxial stretched oriented film.

In order to improve the wettability to the coating agent and the bonding strength to the coating film, a surface treatment such as a corona treatment or a low-temperature plasma treatment may be carried out on a surface of the base film on which the coating film formed of the coating agent is laminated (a surface coated with the coating agent).

On the surface of the base film on which the coating film formed of the coating agent is laminated, an anchor coat or undercoat treatment may be carried out.

The thickness of the base film is not particularly limited, is appropriately selected depending on the costs or usages in consideration of suitability as packing materials or the lamination suitability of coating films, and is practically 3 $\mu$m to 200 $\mu$m, preferably 5 $\mu$m to 120 $\mu$m, and more preferably 10 $\mu$m to 100 $\mu$m.

The coating film formed of the coating agent according to the present embodiment can be formed by applying the coating agent according to the first embodiment of the present invention on a single surface (one surface) or both surfaces of the base film so as to form a coat made (formed) of the coating agent and drying the coat.

As the method for applying the coating agent, well-known wet-type coating methods can be used. Examples of the wet-type coating methods include roll coating, gravure coating, reverse coating, die coating, screen printing, spray coating, and the like.

As the method for drying the coat formed of the coating agent, it is possible to used well-known drying methods such as hot-air drying, hot-roll drying, and infrared irradiation.

The thickness of the coating film formed of the coating agent according to the first embodiment of the present invention, that is, the thickness of the coat formed of the coating agent after drying is set depending on required gas barrier properties, but is preferably 0.1 $\mu$m to 5 $\mu$m, preferably 0.2 $\mu$m to 2 $\mu$m, and more preferably 0.3 $\mu$m to 1 $\mu$m. When the thickness of the coating film made of the coating agent is the lower limit value of the above-described range (0.1 $\mu$m) or more, a sufficient gas barrier property can be easily obtained. When the thickness of the coating film made of the coating agent is the upper limit value of the above-described range (5 $\mu$m) or less, it is easy to form uniformly coated surfaces, and drying loads or manufacturing costs can be suppressed.

When the thickness of the coating film is in a range of 0.3 $\mu$m to 1 $\mu$m, the balance among the gas barrier property, the addition of drying, and the manufacturing costs is superior.

The gas barrier film according to the second embodiment of the present invention may further have a printing layer, an undercoat layer, an overcoat layer, a light-shielding layer, an adhesive layer, a heat-sealable thermally fused layer, and other functional layers as necessary.

In a case in which the gas barrier film according to the present embodiment has a heat-sealable thermally fused layer, this thermally fused layer is disposed on at least one outermost layer of the gas barrier film. When the gas barrier film has the thermally fused layer, the gas barrier film can be sealed by thermal sealing.

The thermally fused layer can be laminated on, for example, a laminate obtained by forming a coating film on a single surface or both surfaces of the base film using the coating agent according to the first embodiment of the present invention using a well-known adhesive such as a polyurethane-based adhesive, a polyester-based adhesive, or a polyether-based adhesive and a well-known dry lamination method, extrusion lamination method, or the like.

"Exerting effects"

In the gas barrier film according to the second embodiment of the present invention, a coating film formed of the coating agent including the aqueous polyurethane resin (A) including the polyurethane resin having an acid group and the polyamine compound, the water-soluble polymer (B), the inorganic layered mineral (C), and the epoxy compound (D) is laminated on at least one surface of the base film formed of a plastic material.

This coating film, as described above, exhibits an excellent gas barrier property even in high-humidity atmospheres and is excellent in terms of the adhesion strength or coating film cohesion strength to other materials (for example, the base film or the thermally fused layer).

Therefore, the gas barrier film according to the present embodiment is excellent in terms of the gas barrier property in high-humidity atmospheres and has sufficient adhesion strength or coating film cohesion strength as packing materials. Therefore, when the gas barrier film according to the present embodiment is used as packing materials, it is possible to enhance the quality-maintaining property of contents.

The gas barrier film according to the present embodiment is useful as packing materials for, for example, food which needs to avoid moisture and oxygen such as dried food, sweets, bread, and delicacies and medicinal products such as disposable body warmers, tablets, medicinal powder, fomentation, and adhesive skin patches.

In addition, the gas barrier film according to the present embodiment can be used in packing fields in which a favorable gas barrier property and transparency which enables the identification of contents are required.

<Coating agent>

A coating agent according to a third embodiment of the present invention includes, as principal components: an aqueous polyurethane resin (A), a water-soluble polymer (B), an inorganic layered mineral (C), and a silane coupling agent (E).

In the present embodiment and a fourth embodiment described below, "aqueous polyurethane resin (A)", "water-soluble polymer (B)", and "inorganic layered mineral (C)" are the same compounds and components as the compounds and components described in the first embodiment and the second embodiment, and descriptions regarding a variety of parameters such as the compositional ratios are also identical thereto, and thus the compounds and components will be given the same reference sign (the same name) and will not be described again.

Hereinafter, the coating agent according to the third embodiment and a gas barrier film according to the fourth embodiment in which the "silane coupling agent (E)" is used instead of the "compound (D) having an epoxy group" in the first embodiment and the second embodiment will be described.

"Silane coupling agent"

As the silane coupling agent (E), ordinarily used compounds can be used, and examples thereof include compounds having alkoxy groups and organic reactive groups bonded to silicon atoms.

Alkoxy groups in the silane coupling agent (E) hydrolyze and thus generate silanol groups and exhibit interaction effects such as reactions, adsorption, and the like between the silanol groups and inorganic compounds. In the coating agent according to the third embodiment of the present invention, the inorganic layered mineral (C) and the silane coupling agent (E) interact with each other, thereby improving the cohesion strength of coating films formed of the coating agent. In addition, organic reactive groups in the silane coupling agent (E) react with organic components such as the urethane resin (A) and the water-soluble polymer (B), thereby improving the adhesion strength of coating films formed of the coating agent to base films formed of a plastic material. Therefore, the inclusion of the silane coupling agent (E) enhances the cohesion strength of coating films formed of the coating agent and improves the adhesive force between the coating films and base films or other base materials, whereby it is possible to enhance the practical strength as packing materials.

Examples of the silane coupling agent (E) include compounds represented by $RSiX_3$ (here, R represents an organic reactive group, and X represents an alkoxy group).

Examples of the organic reactive groups include reactive groups having an amino group, a (meth)acryl group, an epoxy group, a vinyl group, a mercapto group, an isocyanate group, an isocyanurate group, or the like. The (meth)acryl group refers to both an acryl group and a methacryl group.

Examples of the alkoxy groups include a methoxy group, an ethoxy group, and the like.

As the silane coupling agent (E), compounds in which organic reactive groups are reactive with components in the coating agent are preferably used. Examples of silane coupling agents having a vinyl group include vinyltrimethoxysilane, vinyltriethoxysilane, and the like. Examples of silane coupling agents having an epoxy group include 2(3,4-epoxycyclohexyl)ethyltrimethoxysilane, 3-glycidoxypropyltrimethoxysilane, 3-glycidoxypropyltriethoxysilane, 3-glycidoxypropylmethyl dimethoxysilane, 3-glycidoxypropyl ethyl diethoxysilane, and the like. Examples of silane coupling agents having an amino group include 3-aminopropyltrimethoxysilane, 3-aminopropyltriethoxysilane, N-2(aminoethyl)-3-aminopropyltrimethoxysilane, N-2(aminoethyl)-3-aminopropylmethyldimethoxysilane, and the like. Examples of silane coupling agents having a mercapto group include 3-mercaptopropyltrimethoxysilane, 3-mercaptopropylmethyldimethoxysilane, and the like. Examples of silane coupling agents having a (meth)acryl group include 3-acryloxypropyltrimethoxysilane and the like. Examples of silane coupling agents having an isocyanate group include 3-isocyanatepropyltriethoxysilane and the like. Examples of silane coupling agents having an isocyanurate group include tris-(trimethoxysilylpropyl)isocyanurate and the like. These silane coupling agents may be used singly or two or more silane coupling agents may be used in combination.

The silane coupling agent (E) is preferably a compound not having an isocyanate group.

In a case in which the silane coupling agent (E) has an isocyanate group, rapid reactions with components in the coating agent are caused, and there is a concern that the applicability may be adversely affected.

The silane coupling agent (E) is preferably a compound having an epoxy group. The epoxy group has a favorable reactivity with hydroxyl groups in the aqueous urethane resin (A) or the water-soluble polymer (B), and thus the adhesion strength of coating films formed of the coating agent to base films are particularly strongly exhibited.

Generally, the coating agent according to the third embodiment of the present invention includes the aqueous medium described in the first embodiment and the second embodiment.

The coating agent according to the third embodiment of the present invention may further include a variety of additives as necessary as long as the gas barrier property or the strength suitable for laminated films for packing is not impaired.

Examples of the additives include an antioxidant, a weathering agent, a thermal stabilizer, a lubricant, a crystal nucleus agent, an ultraviolet absorbent, a plasticizer, an antistatic agent, a coloring agent, a filler, a surfactant, and the like.

"Content fractions of individual components"

In the coating agent, the mass ratio of the aqueous polyurethane resin (A) to the water-soluble polymer (B) in the solid content (aqueous polyurethane resin (A)/water-soluble polymer (B)) is preferably 85/15 to 10/90, more preferably 75/25 to 20/80, and particularly preferably 70/30 to 25/75.

In a case in which the aqueous polyurethane resin (A)/water-soluble polymer (B) is more than 85/15, there is a concern that unevenness may be caused during the application of the coating agent. Unevenness during the application of the coating agent leads to the deterioration of appearances or the degradation of the barrier property. In a case in which the aqueous polyurethane resin (A)/water-soluble polymer (B) is less than 10/90, the wettability of the coating agent to base films deteriorates, cissing and unevenness are easily caused during the application of the coating agent, and there is a concern that the generation of cissing and unevenness may degrade the barrier property. When the aqueous polyurethane resin (A)/water-soluble polymer (B) is in a predetermined range (85/15 to 10/90), the wettability of the coating agent to base films is favorable, it is possible to evenly apply the coating agent, and coating films having a favorable appearance or barrier property can be formed.

When the aqueous polyurethane resin (A)/water-soluble polymer (B) is 75/25 to 20/80, evenly highly transparent coating films having a favorable barrier property can be obtained, and, when the aqueous polyurethane resin (A)/water-soluble polymer (B) is 70/30 to 25/75, particularly highly transparent coating films can be obtained.

The content (solid content) of the inorganic layered mineral (C) in the coating agent is preferably 5 mass% or more and 60 mass% or less, more preferably 7 mass% or more and 45 mass% or less, and particularly preferably 10 mass% or more and 30 mass% or less of the total solid content in the coating agent. When the content of the inorganic layered mineral (C) is in the above-described range (5 mass% or more and 60 mass% or less), it is possible to effectively exhibit the barrier property in high-humidity environments while maintaining the cohesion strength of coating films formed of the coating agent.

When the content of the inorganic layered mineral (C) is 7 mass% or more and 45 mass% or less, the balance between the coating film cohesion strength and the barrier property in high-humidity environments is superior. When the content of the inorganic layered mineral (C) is 10 mass% or more and 30 mass% or less, the balance between the coating film cohesion strength and the barrier property in high-humidity environments is particularly excellent.

The content (solid content) of the silane coupling agent (E) in the coating agent is preferably 0.5 mass% or more and 30 mass% or less, more preferably 1 mass% or more and 25 mass% or less, and particularly preferably 3 mass% or more and 20 mass% or less of the total solid content in the coating agent. When the content of the silane coupling agent (E) is in the above-described range (0.5 mass% or more and 30 mass% or less), it is possible to sufficiently enhance the cohesive force of coating films formed of the coating agent and the adhesion strength of the coating agent to base films while maintaining the favorable wettability of the coating agent to base films.

When the content (solid content) of the silane coupling agent (E) in the coating agent is 1 mass% or more and 25 mass% or less, the balance between the barrier property and cohesive force of coating films formed of the coating agent and the adhesion strength to base films is superior. When the content (solid content) of the silane coupling agent (E) in the coating agent is 3 mass% or more and 20 mass% or less, the balance between the barrier property and cohesive force of coating films formed of the coating agent and the adhesion strength to base films is particularly excellent.

The total content (solid content) of the aqueous polyurethane resin (A), the water-soluble polymer (B), the inorganic layered mineral (C), and the silane coupling agent (E) in the coating agent is preferably 85 mass% or more, more preferably 90 mass% or more, and particularly preferably 95 mass% or more of the total solid content in the coating agent. The upper limit of the total content is not particularly limited and may be 100 mass%.

The viscosity of the coating agent at 23°C is preferably 10 mPa·s to 80 mPa·s and more preferably 10 mPa·s to 50 mPa·s.

When the viscosity is in a range of 10 mPa·s to 80 mPa·s, coating agents having favorable applicability in which cissing or unevenness is not caused are obtained. When the viscosity is in a range of 10 mPa·s to 50 mPa·s, flat coating films that are uneven only to a small extent can be formed.

The viscosity is a value measured using an E-type viscometer.

The coating agent according to the present embodiment can be prepared by mixing the aqueous polyurethane resin (A), the water-soluble polymer (B), the inorganic layered mineral (C), the silane coupling agent (E), if necessary, additives, an additional aqueous medium, and the like. The mixing order of the respective components is not particularly limited.

The silane coupling agent (E) may be mixed together with other components or be added immediately before the application of the coating agent to base films.

"Exerting effects"

The coating agent according to the present embodiment includes the aqueous polyurethane resin (A) containing the polyurethane resin having acid groups and the polyamine compound, the water-soluble polymer (B), the inorganic layered mineral (C), and the silane coupling agent (E), and thus it is possible to form coating films exhibiting an excellent gas barrier property even in high-humidity atmospheres. In addition, the coating films are excellent in terms of the adhesion strength or coating film cohesion strength to other materials (for example, base films or thermally fused layers described below). Therefore, when the coating agent and other films are attached to each other so as to produce packing materials, sufficient lamination strength can be obtained.

Therefore, when gas barrier films having coating films formed of the coating agent according to the present embodiment are used as packing materials, it is possible to enhance the quality-maintaining property of contents.

Furthermore, the coating agent according to the present embodiment has a long usable time.

In the conventional art, curing agents having isocyanate groups are frequently used in order to exhibit the adhesion strength between coating films formed of coating agents including aqueous polyurethane resins as a principal component and base films. However, in a case in which a curing agent having isocyanate groups is used, the coating agent needs to be a two-liquid-type coating agent that is added immediately before the application since the usable time after the addition of the curing agent to the coating agent is short.

The silane coupling agent (E) has a longer usable time in the co-presence of the aqueous polyurethane resin (A), the water-soluble polymer (B), and the inorganic layered mineral (C) than other curing agents. Therefore, it is possible to produce the coating agent as a one-liquid-type coating agent that is added together with other components. Even in a case in which the coating agent is produced as a one-liquid-type coating agent, the performance of gas barrier films to be obtained is not easily affected by the time taken from the preparation of the coating agent to the formation of coating films, and gas barrier films having favorable performance stability can be manufactured. Therefore, it is possible to stabilize the performance of coating films formed of the coating agent or simplify blending facilities.

<Gas barrier film>

A gas barrier film according to a fourth embodiment of the present invention includes a base film formed of a plastic material and a coating film which is laminated on at least one surface of the base film and is formed of the coating agent according to the third embodiment of the present invention.

Examples of the plastic material constituting the base film include olefin-based resins such as polyethylene, polypropylene, and poly C2-10 olefins such as propylene-ethylene copolymers; polyester-based resins such as polyethylene terephthalate and polybutylene terephthalate; polyamide-based resins such as aliphatic polyamides such as nylon 6 and nylon 66 and aromatic polyamides such as polymetaxylylene adipamide; vinyl-based resins such as polystyrene, polyvinyl acetate, ethylene-vinyl acetate copolymers, polyvinyl alcohol, and ethylene-vinyl alcohol copolymers; acrylic resins such as homo or copolymers of (meth)acrylic monomers such as polymethyl methacrylate and polyacrylonitrile; cellophane, and the like. These resins can be used singly or two or more resins can be used in combination.

Examples of the base film include monolayer films constituted of a single resin, monolayer or laminated films for which a plurality of resins is used, and the like. In addition, laminated base materials obtained by laminating the above-described resin on another base material (metal, wood, paper, ceramic, or the like) may be used.

The base film is preferably a polyolefin-based resin film (particularly, a polypropylene film or the like), a polyester-based resin film (particularly, a polyethylene terephthalate-based resin film), a polyamide-based resin film (particularly, a nylon film), or the like.

The base film may be a non-stretched film or a monoaxial or biaxial stretched oriented film.

In order to improve the wettability to the coating agent and the bonding strength to the coating film, a surface treatment such as a corona treatment or a low-temperature plasma treatment may be carried out on a surface of the base film on which the coating film formed of the coating agent is laminated (a surface coated with the coating agent).

On the surface of the base film on which the coating film formed of the coating agent is laminated, an anchor coat or undercoat treatment may be carried out.

The thickness of the base film is not particularly limited, is appropriately selected depending on the costs or usages in consideration of suitability as packing materials or the lamination suitability of coating films, and is practically 3 $\mu$m to 200 $\mu$m, preferably 5 $\mu$m to 120 $\mu$m, and more preferably 10 $\mu$m to 100 $\mu$m.

The coating film formed of the coating agent according to the third embodiment of the present invention can be formed by applying the coating agent according to the third embodiment of the present invention on a single surface (one surface) or both surfaces of the base film so as to form a coating made of the coating agent (formed of the coating agent) and drying the coating.

As the method for applying the coating agent, well-known wet-type coating methods can be used. Examples of the wet-type coating methods include roll coating, gravure coating, reverse coating, die coating, screen printing, spray coating, and the like.

As the method for drying the coat formed of the coating agent, it is possible to used well-known drying methods such as hot-air drying, hot-roll drying, and infrared irradiation.

The thickness of the coating film formed of the coating agent according to the third embodiment of the present invention, that is, the thickness of the coat formed of the coating agent after drying is set depending on required gas barrier properties, but is preferably 0.1 $\mu$m to 5 $\mu$m, preferably 0.2 $\mu$m to 2 $\mu$m, and more preferably 0.3 $\mu$m to 1 $\mu$m. When the thickness of the coating film made of the coating agent is the lower limit value of the above-described range (0.1 $\mu$m) or more, a sufficient gas barrier property can be easily obtained. When the thickness of the coating film made of the coating agent is the upper limit value of the above-described range (5 $\mu$m) or less, it is easy to form uniformly coated surfaces, and drying loads or manufacturing costs can be suppressed.

When the thickness of the coating film is in a range of 0.3 $\mu$m to 1 $\mu$m, the balance among the gas barrier property, the addition of drying, and the manufacturing costs is superior.

The gas barrier film according to the fourth embodiment of the present invention may further have a printing layer, an undercoat layer, an overcoat layer, a light-shielding layer, an adhesive layer, a heat-sealable thermally fused layer, and other functional layers as necessary.

In a case in which the gas barrier film according to the present embodiment has a heat-sealable thermally fused layer, this thermally fused layer is disposed on at least one outermost layer of the gas barrier film. When the gas barrier film has the thermally fused layer, the gas barrier film can be sealed by thermal sealing.

The thermally fused layer can be laminated on, for example, a laminate obtained by forming a coating film on a single surface or both surfaces of the base film using the coating agent according to the third embodiment of the present invention using a well-known adhesive such as a polyurethane-based adhesive, a polyester-based adhesive, or a polyether-based adhesive and a well-known dry lamination method, extrusion lamination method, or the like.

"Exerting effects"

In the gas barrier film according to the fourth embodiment of the present invention, a coating film formed of the coating agent including the aqueous polyurethane resin (A) including the polyurethane resin having an acid group and the polyamine compound, the water-soluble polymer (B), the inorganic layered mineral (C), and the silane coupling agent (E) is laminated on at least one surface of the base film formed of a plastic material.

This coating film, as described above, exhibits an excellent gas barrier property even in high-humidity atmospheres and is excellent in terms of the adhesion strength or coating film cohesion strength to other materials (for example, the base film or the thermally fused layer).

Therefore, the gas barrier film according to the present embodiment is excellent in terms of the gas barrier property in high-humidity atmospheres and has sufficient adhesion strength or coating film cohesion strength as packing materials. Therefore, when the gas barrier film according to the present embodiment is used as packing materials, it is possible to enhance the quality-maintaining property of contents.

The gas barrier film according to the present embodiment is useful as packing materials for, for example, food which needs to avoid moisture and oxygen such as dried food, sweets, bread, and delicacies and medicinal products such as disposable body warmers, tablets, medicinal powder, fomentation, and adhesive skin patches.

In addition, the gas barrier film according to the present embodiment can be used in packing fields in which a favorable gas barrier property and transparency which enables the identification of contents are required.

Examples

Hereinafter, the embodiments of the present invention will be more specifically described using examples and comparative examples. However, the present invention is not limited to the following examples.

Hereinafter, materials used in individual examples described below will be described.

<Materials used>

"Aqueous polyurethane resin (A)"

(A1): An aqueous polyurethane resin containing a polyurethane resin having acid groups and a polyamine compound, an aqueous polyurethane dispersion "TAKELAC (registered trademark) WPB-341" manufactured by Mitsui Chemicals, Inc.

"Water-soluble polymer (B)"

(B1): A polyvinyl alcohol having a degree of saponification of 98% to 99% and a degree of polymerization of 500 (trade name: POVAL PVA-105, manufactured by Kuraray Co., Ltd.)
(B2): Carboxymethyl cellulose (CMC)

"Inorganic layered mineral (C)"

(C1): Water-swellable synthetic mica (trade name: SOMASIF (registered trademark) MEB-3, manufactured by Co-op Chemical Co., Ltd.)
(C2): Sodium hectorite (trade name: NHT-sol B2, manufactured by Topy Industries Limited.)

"Epoxy compound (D) and comparative product of epoxy compound (D)"

(D1): Sorbitol polyglycidyl ether (trade name: DENACOL (registered trademark) EX-614, manufactured by Nagase ChemteX Corporation, tetra- or higher-functional, water solubility ratio: 78%)
(D2): Polyglycerol polyglycidyl ether (trade name: DENACOL EX-521, manufactured by Nagase ChemteX Corporation, tetra- or higher-functional, water solubility ratio: 100%)
(D3): 3-Glycidoxypropyltriethoxysilane (trade name: KBE-403, manufactured by Shin-Etsu Silicone Co., Ltd., monofunctional, water solubility ratio: 100%)
(D4): Resorcinol diglycidyl ether (trade name: DENACOL EX-201, manufactured by Nagase ChemteX Corporation, bifunctional, water solubility ratio: 0%)
(D5): Trimethylolpropane polyglycidyl ether (trade name: DENACOL EX-321, manufactured by Nagase ChemteX Corporation, bi- or trifunctional, water solubility ratio: 27%)
(D6): 3',4'-Epoxycyclohexyl 3,4-epoxycyclohexane carboxylate (trade name: CELLOXIDE (registered trademark) 2021P, manufactured by Daicel Corporation, bifunctional, water solubility ratio: 0%)
Comparative product: Isocyanate-based compound (trade name: TAKENATE (registered trademark) WD-725 manufactured by Mitsui Chemicals, Inc.)
"Silane coupling agent (E) and comparative product of silane coupling agent (E)"
(E1): 3-Glycidoxypropyltriethoxysilane (trade name: KBE-403, manufactured by Shin-Etsu Silicone Co., Ltd.)
(E2): 2-(3,4-Epoxycyclohexyl)ethyltrimethoxysilane (trade name: KBE-303, manufactured by Shin-Etsu Silicone Co., Ltd.)
(E3): Tris-(trimethoxysilyl)triisocyanurate (trade name: KBM-9659, manufactured by Shin-Etsu Silicone Co., Ltd.)
(E4): 3-Mercaptopropyltrimethoxysilane (trade name: KBM-803, manufactured by Shin-Etsu Silicone Co., Ltd.)
Comparative product: Isocyanate-based curing agent (trade name: TAKENATE (registered trademark) WD-725, manufactured by Mitsui Chemicals, Inc.)

<Examples 1 to 12 and Reference Examples 13 to 15>

First, the aqueous polyurethane resin (A) and the water-soluble polymer (B) were blended with each other according to the types and the compounding ratio (mass%) shown in Tables 1 and 2, next, the inorganic layered mineral (C) was added thereto, and, after that, the mixture was diluted with ion exchange water and isopropanol so that the content of isopropanol was 10 mass% of the entire aqueous medium and the concentration of the solid contents was 8.2 mass%. To the obtained diluted substance, the epoxy compound (D) was added according to the types and the compounding ratio (mass%) shown in Tables 1 and 2, thereby preparing coating agents of Examples 1 to 12 and Reference Examples 13 to 15. Here, the compounding ratio refer to the proportions of the respective components in the entire solid content in terms of the solid content, which will also be the case below.

Gas barrier films were obtained in the following order using the coating agents of Examples 1 to 12 and Reference Examples 13 to 15, which had been just prepared (immediately after the addition of the epoxy compound (D)).

The coating agent was applied onto a corona-treated surface of a biaxial stretched polypropylene film (trade name: U-1, thickness: 20 μm, manufactured by Mitsui Chemicals Tohcello. Inc.) which was a base film using a gravure printer and was dried so as to form a coating film, thereby obtaining a gas barrier film.

The thicknesses of the formed coating films were confirmed and measured using an electronic microscope and were found to be all 0.6 μm.

After the preparation, the coating agents of Examples 1 to 15 were stored at 23°C for one week. Coating films were formed on a corona-treated surface of a base film in the same manner as described above using the coating agents that had been stored for one week, thereby obtaining gas barrier films.

<Comparative Examples 1 to 5>

First, the aqueous polyurethane resin (A) and the water-soluble polymer (B) were blended with each other according to the types and the compounding ratio (mass%) shown in Table 3, next, the inorganic layered mineral (C) was added thereto, and, after that, the mixture was diluted with ion exchange water and isopropanol so that the content of isopropanol was 10 mass% of the entire aqueous medium and the concentration of the solid contents was 8.2 mass%. To the obtained diluted substance, the epoxy compound (D) or the comparative product of the epoxy compound (D) was added according to the types and the compounding ratio (mass%) shown in Table 3, thereby preparing coating agents of Comparative Examples 1 to 5.

Gas barrier films were obtained in the following order using the coating agents of Comparative Examples 1 to 5 which had been just prepared (immediately after the addition of the epoxy compound (D) or the comparative product of the epoxy compound (D)).

The coating agent was applied onto a corona-treated surface of a biaxial stretched polypropylene film (trade name: U-1, thickness: 20 μm, manufactured by Mitsui Chemicals Tohcello. Inc.) which was a base film using a gravure printer and was dried so as to form a coating film, thereby obtaining a gas barrier film.

The thicknesses of the formed coating films were confirmed and measured using an electronic microscope and were found to be all 0.6 μm.

After the preparation, the coating agents of Comparative Examples 1 to 5 were stored at 23°C for one week. Coating films were formed on a corona-treated surface of a base film in the same manner as described above using the coating agents that had been stored for one week, thereby obtaining gas barrier films.

<Evaluations>

(1) Oxygen gas barrier property

For the gas barrier films of Examples 1 to 12, Reference Examples 13 to 15 and Comparative Examples 1 to 5, the oxygen permeation rate ($cm^3/(m^2 \cdot day \cdot MPa)$) in an atmosphere of 20°C and 80%RH was measured using an oxygen permeation rate measurement instrument (trade name: OXTRAN-2/20, manufactured by MOCON Inc.).

The evaluation results are shown in Tables 1 to 3. The oxygen permeation rates of the gas barrier films obtained by the application of the coating agent to which the epoxy compound (D) or the comparative product of the epoxy compound (D) had been just added are shown in the "initial oxygen permeation rate" row, and the oxygen permeation rates of the gas barrier films obtained by the application of the coating agent to which the epoxy compound (D) or the comparative product of the epoxy compound (D) had been added and then stored for one week are shown in the "oxygen permeation rate after 1W storage" row.

(2) Lamination strength

A 30 μm-thick non-stretched polypropylene film (trade name: CPP GLC, manufactured by Mitsui Chemicals Tohcello. Inc.) was laminated on a coated surface side (coating film side) of the gas barrier film obtained in each of Examples 1 to 12, Reference Examples 13 to 15 and Comparative Examples 1 to 5 through a polyester urethane-based adhesive (trade name: TAKELAC A-969, TAKENATE A-5, manufactured by Mitsui Chemicals, Inc.) by a dry lamination process and was cured at 50°C for 48 hours, thereby obtaining a laminate film.

The laminate film was cut into a 15 mm-wide strip-shaped piece, and the gas barrier film was 90° peeled off from the non-stretched polypropylene film using a tensile tester Tensilon at a rate of 300 mm/minute, and the lamination strength (N/15 mm) was measured.

The evaluation results are shown in Tables 1 to 3.

The lamination strengths of the gas barrier films obtained by the application of the coating agent to which the epoxy compound (D) or the comparative product of the epoxy compound (D) had been just added are shown in the "initial lamination strength" row, and the lamination strengths of the gas barrier films obtained by the application of the coating agent to which the epoxy compound (D) or the comparative product of the epoxy compound (D) had been added and then stored for one week are shown in the "lamination strength after 1W storage" row.

[Table 1]

| | Example | | | | | | | |
|---|---|---|---|---|---|---|---|---|
| | 1 | 2 | 3 | 4 | 5 | 6 | 7 | 8 |
| Aqueous polyurethane | (A1) | (A1) | (A1) | (A1) | (A1) | (A1) | (A1) | (A1) |
| Compounding ratio (%) | 30 | 60 | 15 | 30 | 35 | 25 | 30 | 30 |
| Water-soluble polymer (B) | (B1) | (B1) | (B1) | (B1) | (B1) | (B1) | (B1) | (B1) |
| Compounding ratio (%) | 45 | 15 | 60 | 40 | 45 | 45 | 45 | 45 |
| Inorganic layered mineral (C) | (C1) | (C1) | (C1) | (C1) | (C1) | (C1) | (C1) | (C1) |
| Compounding ratio (%) | 15 | 15 | 15 | 15 | 15 | 20 | 15 | 15 |
| Epoxy compound (D) | (D1) | (D1) | (D1) | (D1) | (D1) | (D1) | (D2) | (D3) |
| Compounding ratio (%) | 10 | 10 | 10 | 15 | 5 | 10 | 10 | 10 |
| Initial oxygen permeation rate ($cm^3/(m^2 \cdot day \cdot MPa)$) | 30 | 20 | 35 | 35 | 30 | 25 | 35 | 50 |
| Oxygen permeation rate after 1W storage ($cm^3/(m^2 \cdot day \cdot MPa)$) | 30 | 25 | 40 | 35 | 30 | 30 | 40 | 50 |
| Initial lamination strength (N/15 mm) | 1.9 | 1.5 | 2.1 | 2.2 | 1.6 | 1.5 | 1.7 | 2.2 |
| Lamination strength after 1W storage (N/15 mm) | 1.8 | 1.5 | 2.1 | 2.1 | 1.6 | 1.5 | 1.7 | 2.1 |

[Table 2]

| | Example | | | | | | |
|---|---|---|---|---|---|---|---|
| | 9 | 10 | 11 | 12 | 13 | 14 | 15 |
| Aqueous polyurethane resin (A) | (A1) | (A1) | (A1) | (A1) | (A1) | (A1) | (A1) |
| Compounding ratio (%) | 65 | 7 | 30 | 50 | 30 | 30 | 30 |
| Water-soluble polymer (B) | (B1) | (B1) | (B2) | (B1) | (B1) | (B1) | (B1) |
| Compounding ratio (%) | 10 | 68 | 45 | 25 | 45 | 45 | 45 |
| Inorganic layered mineral (C) | (C1) | (C1) | (C1) | (C2) | (C1) | (C1) | (C1) |
| Compounding ratio (%) | 15 | 15 | 15 | 15 | 15 | 15 | 15 |
| Epoxy compound (D) | (D2) | (D1) | (D1) | (D1) | (D4) | (D5) | (D6) |
| Compounding ratio (%) | 10 | 10 | 10 | 10 | 10 | 10 | 10 |
| Initial oxygen permeation rate ($cm^3/(m^2 \cdot day \cdot MPa)$) | 100 | 90 | 90 | 15 | 100 | 80 | 80 |
| Oxygen permeation rate after 1W storage ($cm^3/(m^2 \cdot day \cdot MPa)$) | 110 | 100 | 100 | 20 | 110 | 90 | 110 |
| Initial lamination strength (N/15 mm) | 1.2 | 2 | 1.4 | 1.3 | 2.2 | 1.8 | 2.1 |
| Lamination strength after 1W storage (N/15 mm) | 1.2 | 1.8 | 1.2 | 1.3 | 2.1 | 1.7 | 2 |
| Note: Examples 13 to 15 are Reference Examples | | | | | | | |

[Table 3]

| | Comparative Example | | | | |
|---|---|---|---|---|---|
| | 1 | 2 | 3 | 4 | 5 |
| Aqueous polyurethane resin (A) | (A1) | (A1) | | (A1) | (A1) |
| Compounding ratio (%) | 30 | 35 | | 75 | 35 |
| Water-soluble polymer (B) | (B1) | (B1) | (B1) | | (B1) |

(continued)

| | Comparative Example | | | | |
|---|---|---|---|---|---|
| | 1 | 2 | 3 | 4 | 5 |
| Compounding ratio (%) | 45 | 50 | 75 | | 55 |
| Inorganic layered mineral (C) | (C1) | (C1) | (C1) | (C1) | |
| Compounding ratio (%) | 15 | 15 | 15 | 15 | |
| Epoxy compound (D) | Comparative product | | (D1) | (D1) | (D1) |
| Compounding ratio (%) | 10 | | 10 | 10 | 10 |
| Initial oxygen permeation rate ($cm^3/(m^2 \cdot day \cdot MPa)$) | 60 | 30 | 200 | 18 | 650 |
| Oxygen permeation rate after 1W storage ($cm^3/(m^2 \cdot day \cdot MPa)$) | 220 | 30 | 220 | 22 | 700 |
| Initial lamination strength (N/15 mm) | 1.5 | 0.1 | 0.5 | 0.5 | 2.2 |
| Lamination strength after 1W storage (N/15 mm) | 0.1 | 0.1 | 0.4 | 0.4 | 2 |

The results of Tables 1 to 3 show that, in the gas barrier films of Examples 1 to 12 and Reference Examples 13 to 15, the coating film formed of the coating agent including the aqueous polyurethane resin (A) containing the polyurethane resin having acid groups and the polyamine compound, the water-soluble polymer (B), the inorganic layered mineral (C), and the epoxy compound (D) as the principal components was laminated, and thus the oxygen barrier property in an atmosphere of 20°C and 80%RH and the lamination strength were both excellent. In addition, even after one-week storage from the addition of the epoxy compound (D), the oxygen barrier property and the lamination strength were maintained. From these results, it could be confirmed that the usable times of the coating agents of Examples 1 to 12 and Reference Examples 13 to 15 were long.

From the comparison between Example 1 and Reference Examples 13 to 15 in which the compositions of the coating agents were identical to each other except for the types of the epoxy compound (D), it could be confirmed that, in a case in which the water solubility ratio of the epoxy compound (D) was 50 mass% or more, superior oxygen barrier properties could be obtained compared with a case in which the water solubility ratio was less than 50 mass%.

Among them, particularly, in the gas barrier films of Examples 1 to 8 and 12 in which the polyvinyl alcohol was used as the water-soluble polymer (B), the compound having a water solubility ratio of 50 mass% or more was used as the epoxy compound (D), and the mass ratios of the aqueous polyurethane resin (A) to the water-soluble polymer (B) in the solid content was in a range of 85/15 to 10/90, the oxygen barrier property after one-week storage from the addition of the epoxy compound (D) were 60 $cm^3/(m^2 \cdot day \cdot MPa)$ or less, and the lamination strengths were 1.3 N/15 mm or more, which are favorable values.

On the other hand, in Comparative Example 1 in which the isocyanate-based curing agent was used instead of the epoxy compound (D) for the coating agent, the oxygen barrier property and the lamination strength after one-week storage from the addition of the curing agent were significantly degraded compared with the initial values.

In Comparative Examples 2 to 5 in which the coating agents lacking any of the aqueous polyurethane resin (A) containing the polyurethane resin having acid groups and the polyamine compound, the water-soluble polymer (B), the inorganic layered mineral (C), and the epoxy compound (D) were used, any of the oxygen barrier properties and the lamination strengths were insufficient.

<Examples 16 to 29>

First, the aqueous polyurethane resin (A) and the water-soluble polymer (B) were blended with each other according to the types and the compounding ratio (mass%) shown in Tables 4 to 6, next, the inorganic layered mineral (C) was added thereto, and, after that, the mixture was diluted with ion exchange water and isopropanol so that the content of isopropanol was 10 mass% of the entire aqueous medium and the concentration of the solid contents was 8.2 mass%. To the obtained diluted substance, the silane coupling agent (E) was added according to the types and the compounding ratio (mass%) shown in Tables 4 to 6, thereby preparing coating agents of Examples 16 to 29. Here, the compounding ratio refer to the proportions of the respective components in the entire solid content in terms of the solid content, which will also be the case below.

Gas barrier films were obtained in the following order using the coating agents of Examples 16 to 29 which had been just prepared (immediately after the addition of the silane coupling agent (E)).

The coating agent was applied onto a corona-treated surface of a biaxial stretched polypropylene film (trade name: U-1, thickness: 20 μm, manufactured by Mitsui Chemicals Tohcello. Inc.) which was a base film using a gravure printer and was dried so as to form a coating film, thereby obtaining a gas barrier film.

The thicknesses of the formed coating films were confirmed and measured using an electronic microscope and were found to be all 0.6 μm.

After the preparation, the coating agents of Examples 16 to 29 were stored at 23°C for one week. Coating films were formed on a corona-treated surface of a base film in the same manner as described above using the coating agents that had been stored for one week, thereby obtaining gas barrier films.

<Comparative Examples 6 to 10>

First, the aqueous polyurethane resin (A) and the water-soluble polymer (B) were blended with each other according to the types and the compounding ratio (mass%) shown in Table 6, next, the inorganic layered mineral (C) was added thereto, and, after that, the mixture was diluted with ion exchange water and isopropanol so that the content of isopropanol was 10 mass% of the entire aqueous medium and the concentration of the solid contents was 8.2 mass%. To the obtained diluted substance, the silane coupling agent (E) or the comparative product of the silane coupling agent (E) was added according to the types and the compounding ratio (mass%) shown in Table 6, thereby preparing coating agents of Comparative Examples 6 to 10.

Gas barrier films were obtained in the following order using the coating agents of Comparative Examples 6 to 10 which had been just prepared (immediately after the addition of the silane coupling agent (E) or the comparative product of the silane coupling agent (E)).

The coating agent was applied onto a corona-treated surface of a biaxial stretched polypropylene film (trade name: U-1, thickness: 20 μm, manufactured by Mitsui Chemicals Tohcello. Inc.) which was a base film using a gravure printer and was dried so as to form a coating film, thereby obtaining a gas barrier film.

The thicknesses of the formed coating films were confirmed and measured using an electronic microscope and were found to be all 0.6 μm.

After the preparation, the coating agents of Comparative Examples 6 to 10 were stored at 23°C for one week. Coating films were formed on a corona-treated surface of a base film in the same manner as described above using the coating agents that had been stored for one week, thereby obtaining gas barrier films.

<Evaluations>

(1) Oxygen gas barrier property

For the gas barrier films of Examples 16 to 29 and Comparative Examples 6 to 10, the oxygen permeation rate ($cm^3$/($m^2$·day·MPa)) in an atmosphere of 20°C and 80%RH was measured using an oxygen permeation rate measurement instrument (trade name: OXTRAN-2/20, manufactured by MOCON Inc.).

The evaluation results are shown in Tables 4 to 6. The oxygen permeation rates of the gas barrier films obtained by the application of the coating agent to which the silane coupling agent (E) or the comparative product of the silane coupling agent (E) had been just added are shown in the "initial oxygen permeation rate" row, and the oxygen permeation rates of the gas barrier films obtained by the application of the coating agent to which silane coupling agent (E) or the comparative product of the silane coupling agent (E) had been added and then stored for one week are shown in the "oxygen permeation rate after 1W storage" row.

(2) Lamination strength

A 30 μm-thick non-stretched polypropylene film (trade name: CPP GLC, manufactured by Mitsui Chemicals Tohcello. Inc.) was laminated on a coated surface side (coating film side) of the gas barrier film obtained in each of Examples 16 to 29 and Comparative Examples 6 to 10 through a polyester urethane-based adhesive (trade name: TAKELAC A-969, TAKENATE A-5, manufactured by Mitsui Chemicals, Inc.) by a dry lamination process and was cured at 50°C for 48 hours, thereby obtaining a laminate film.

The laminate film was cut into a 15 mm-wide strip-shaped piece, and the gas barrier film was 90° peeled off from the non-stretched polypropylene film using a tensile tester Tensilon at a rate of 300 mm/minute, and the lamination strength (N/15 mm) was measured.

The evaluation results are shown in Tables 4 to 6. The lamination strengths of the gas barrier films obtained by the application of the coating agent to which the silane coupling agent (E) or the comparative product of the silane coupling agent (E) had been just added are shown in the "initial lamination strength" row, and the lamination strengths of the gas barrier films obtained by the application of the coating agent to which the silane coupling agent (E) or the comparative product of the silane coupling agent (E) had been added and then stored for one week are shown in the "lamination strength after 1W storage" row.

[Table 4]

|  | Example | | | | | | |
|---|---|---|---|---|---|---|---|
|  | 16 | 17 | 18 | 19 | 20 | 21 | 22 |
| Aqueous polyurethane resin (A) | (A1) | (A1) | (A1) | (A1) | (A1) | (A1) | (A1) |
| Compounding ratio (%) | 30 | 50 | 60 | 15 | 30 | 35 | 30 |
| Water-soluble polymer (B) | (B1) | (B1) | (B1) | (B1) | (B1) | (B1) | (B1) |
| Compounding ratio (%) | 45 | 25 | 15 | 60 | 40 | 45 | 40 |
| Inorganic layered mineral (C) | (C1) | (C1) | (C1) | (C1) | (C1) | (C1) | (C1) |
| Compounding ratio (%) | 15 | 15 | 15 | 15 | 15 | 15 | 20 |
| Silane coupling agent (E) | (E1) | (E1) | (E1) | (E1) | (E1) | (E1) | (E1) |
| Compounding ratio (%) | 10 | 10 | 10 | 10 | 15 | 5 | 10 |
| Initial oxygen permeation rate ($cm^3$/($m^2 \cdot$day$\cdot$MPa)) | 50 | 40 | 35 | 65 | 60 | 40 | 30 |
| Oxygen permeation rate after 1W storage ($cm^3$/($m^2 \cdot$day$\cdot$MPa)) | 50 | 45 | 40 | 75 | 60 | 50 | 40 |
| Initial lamination strength (N/15 mm) | 2.2 | 2 | 1.8 | 2.2 | 2.3 | 1.7 | 1.7 |
| Lamination strength after 1W storage (N/15 mm) | 2.1 | 2 | 1.7 | 2.1 | 2.1 | 1.6 | 1.6 |

[Table 5]

|  | Example | | | | | | |
|---|---|---|---|---|---|---|---|
|  | 23 | 24 | 25 | 26 | 27 | 28 | 29 |
| Aqueous polyurethane resin (A) | (A1) | (A1) | (A1) | (A1) | (A1) | (A1) | (A1) |
| Compounding ratio (%) | 50 | 65 | 7 | 30 | 50 | 50 | 50 |
| Water-soluble polymer (B) | (B1) | (B1) | (B1) | (B2) | (B1) | (B1) | (B1) |
| Compounding ratio (%) | 25 | 10 | 68 | 45 | 25 | 25 | 25 |
| Inorganic layered mineral (C) | (C1) | (C1) | (C1) | (C1) | (C2) | (C1) | (C1) |
| Compounding ratio (%) | 15 | 15 | 15 | 15 | 15 | 15 | 15 |
| Silane coupling agent (E) | (E2) | (E1) | (E1) | (E1) | (E1) | (E3) | (E4) |
| Compounding ratio (%) | 10 | 10 | 10 | 10 | 10 | 10 | 10 |
| Initial oxygen permeation rate ($cm^3$/($m^2 \cdot$day$\cdot$MPa)) | 30 | 110 | 120 | 70 | 20 | 70 | 35 |
| Oxygen permeation rate after 1W storage ($cm^3$/($m^2 \cdot$day$\cdot$MPa)) | 35 | 130 | 130 | 90 | 30 | 90 | 35 |
| Initial lamination strength (N/15 mm) | 1.9 | 1.2 | 1.8 | 1.4 | 1.3 | 1.6 | 1.3 |
| Lamination strength after 1W storage (N/15 mm) | 1.8 | 1.1 | 1.5 | 1.2 | 1.2 | 1.2 | 1.1 |

[Table 6]

|  | Comparative Example | | | | |
|---|---|---|---|---|---|
|  | 6 | 7 | 8 | 9 | 10 |
| Aqueous polyurethane resin (A) | (A1) | (A1) |  | (A1) | (A1) |
| Compounding ratio (%) | 30 | 35 |  | 75 | 35 |
| Water-soluble polymer (B) | (B1) | (B1) | (B1) |  | (B1) |

(continued)

| | Comparative Example | | | | |
|---|---|---|---|---|---|
| | 6 | 7 | 8 | 9 | 10 |
| Compounding ratio (%) | 45 | 50 | 75 | | 55 |
| Inorganic layered mineral (C) | (C1) | (C1) | (C1) | (C1) | |
| Compounding ratio (%) | 15 | 15 | 15 | 15 | |
| Silane coupling agent (E) | Comparative product | | (E1) | (E1) | (E1) |
| Compounding ratio (%) | 10 | | 10 | 10 | 10 |
| Initial oxygen permeation rate ($cm^3$/($m^2 \cdot day \cdot MPa$)) | 60 | 30 | 250 | 25 | 850 |
| Oxygen permeation rate after 1W storage ($cm^3$/($m^2 \cdot day \cdot MPa$)) | 220 | 30 | 300 | 30 | 900 |
| Initial lamination strength (NIIS mm) | 1.5 | 0.1 | 0.5 | 0.5 | 2.2 |
| Lamination strength after 1W storage (N/15 mm) | 0.1 | 0.1 | 0.4 | 0.4 | 2 |

The results of Tables 4 to 6 show that, in the gas barrier films of Examples 16 to 29, the coating film formed of the coating agent including the aqueous polyurethane resin (A) containing the polyurethane resin having acid groups and the polyamine compound, the water-soluble polymer (B), the inorganic layered mineral (C), and the silane coupling agent (E) as the principal components was laminated, and thus the oxygen barrier property in an atmosphere of 20°C and 80%RH and the lamination strength were both excellent. In addition, even after one-week storage from the addition of the silane coupling agent (E), the oxygen barrier property and the lamination strength were maintained. From these results, it could be confirmed that the usable times of the coating agents of Examples 16 to 29 were long.

Particularly, in the gas barrier films of Examples 16 to 23 in which the polyvinyl alcohol was used as the water-soluble polymer (B), the water-swellable synthetic mica was used as the inorganic layered mineral (C), the silane coupling agent including epoxy groups was used as the silane coupling agent (E), and the mass ratios of the aqueous polyurethane resin (A) to the water-soluble polymer (B) in the solid content was in a range of 85/15 to 10/90, the oxygen barrier property after one-week storage from the addition of the silane coupling agent was 80 $cm^3$/($m^2 \cdot day \cdot MPa$) or less, and the lamination strengths were 1.5 N/15 mm or more, which are favorable values.

From the comparison between Examples 17, 28, and 29 in which the compositions of the coating agents were identical to each other except for the types of the silane coupling agent (E), it could be confirmed that, in a case in which the silane coupling agent including epoxy groups was used as the silane coupling agent (E), superior lamination strengths could be obtained compared with a case in which other silane coupling agents were used.

On the other hand, in Comparative Example 6 in which the isocyanate-based curing agent was used instead of the silane coupling agent (E) for the coating agent, the oxygen barrier property and the lamination strength after one-week storage from the addition of the curing agent were significantly degraded compared with the initial values.

In Comparative Examples 7 to 10 in which the coating agents lacking any of the aqueous polyurethane resin (A) containing the polyurethane resin having acid groups and the polyamine compound, the water-soluble polymer (B), the inorganic layered mineral (C), and the silane coupling agent (E) were used, any of the oxygen barrier properties and the lamination strengths were insufficient.

Industrial Applicability

The coating agent of the present invention has a long usable time and is thus capable of providing gas barrier films having favorable performance stability in the case of being laminated as coating films.

In addition, the gas barrier film of the present invention exhibits an excellent gas barrier property even in high-humidity atmospheres and, additionally, has sufficient adhesion strength of coating film cohesion strength as packing materials.

Therefore, when the gas barrier film according to the present embodiment is used as packing materials, it is possible to enhance the quality-maintaining property of contents.

**Claims**

1. A coating agent, comprising, as principal components:

an aqueous polyurethane resin (A) including a polyurethane resin having an acid group and a polyamine compound;

a water-soluble polymer (B) which is polyvinyl alcohol;

an inorganic layered mineral (C); and

a compound (D) which is a monofunctional epoxy compound other than a silane coupling agent, wherein a mass ratio of the aqueous polyurethane resin (A) to the polyvinyl alcohol in a solid content is 85/15 to 10/90, the compound (D) does not have an isocyanate group, and

a water solubility ratio of the compound (D) at 25°C is 60 mass% or

more, wherein the water solubility ratio is determined as described herein.

2. The coating agent according to Claim 1,

wherein the compound (D) is at least one selected from the group consisting of phenyl glycidyl ether, 2-ethylhexyl glycidyl ether, ethyl diethylene glycol glycidyl ether, dicyclopentadiene glycidyl ether, and 2-hydroxyethyl glycidyl ether.

3. A gas barrier film, comprising:

a base film formed of a plastic material; and

a coating film which is laminated on at least one surface of the base film, the coating film being formed of the coating agent according to Claim 1 or 2.

4. A coating agent, comprising, as principal components:

an aqueous polyurethane resin (A) including a polyurethane resin having an acid group and a polyamine compound;

a water-soluble polymer (B) which is polyvinyl alcohol;

an inorganic layered mineral (C); and

a multifunctional epoxy compound, wherein

a mass ratio of the aqueous polyurethane resin (A) to the polyvinyl alcohol in a solid content is 85/15 to 10/90, the multifunctional epoxy compound does not have an isocyanate group, and

a water solubility ratio of the compound (D) at 25°C is 60 mass% or

more, wherein the water solubility ratio is determined as described herein.

5. The coating agent according to Claim 4,

wherein the inorganic layered mineral (C) is a smectite-based clay mineral such as a montmorillonite or a mica-based clay mineral.

6. The coating agent according to Claim 4 or 5,

wherein the multifunctional epoxy compound is at least one selected from the group consisting of hydroquinone diglycidyl ether, resorcinol diglycidyl ether, ethylene glycol diglycidyl ether, polyethylene glycol diglycidyl ether, cyclohexene diol diglycidyl ether, cyclohexane dimethanol diglycidyl ether, dicyclopentadiene diol diglycidyl ether, sorbitol polyglycidyl ether, polyglycerol polyglycidyl ether, trimethylolpropane triglycidyl ether, pentaerythritol tetraglycidyl ether, phenol novolac-type epoxy resins, cresol novolac-type epoxy resins, and epoxidized polybutadiene.

7. A gas barrier film, comprising:

a base film formed of a plastic material; and

a coating film which is laminated on at least one surface of the base film, the coating film being formed of the coating agent according to any one of Claims 4 to 6.

**Patentansprüche**

1. Beschichtungsmittel, das als Hauptbestandteile umfasst:

ein wässriges Polyurethanharz (A), das ein Polyurethanharz mit einer Säuregruppe und eine Polyaminverbindung beinhaltet;

ein wasserlösliches Polymer (B), das Polyvinylalkohol ist;

ein anorganisches Schichtmineral (C); und

eine Verbindung (D), die eine monofunktionelle Epoxyverbindung ist, bei der es sich nicht um ein Silan-Kupplungsmittel handelt, wobei

ein Massenverhältnis des wässrigen Polyurethanharzes (A) zu dem Polyvinylalkohol in einem festen Anteil 85/15 bis 10/90 beträgt,

die Verbindung (D) keine Isocyanatgruppe aufweist, und

das Wasserlöslichkeitsverhältnis der Verbindung (D) bei 25°C 60 Masse-% oder mehr beträgt, wobei das Wasserlöslichkeitsverhältnis wie hierin beschrieben bestimmt wird.

**2.** Beschichtungsmittel nach Anspruch 1,

wobei die Verbindung (D) zumindest eine ist, die aus der Gruppe ausgewählt ist, die aus Phenylglycidylether, 2-Ethylhexylglycidylether, Ethyldiethylenglykolglycidylether, Dicyclopentadienglycidylether und 2-Hydroxyethylglycidylether besteht.

**3.** Gassperrfilm, umfassend:

einen aus einem Kunststoffmaterial gebildete Grundfilm; und

einen Beschichtungsfilm, der auf mindestens eine Oberfläche des Grundfilms laminiert ist, wobei der Beschichtungsfilm aus dem Beschichtungsmittel nach Anspruch 1 oder 2 gebildet ist.

**4.** Beschichtungsmittel, das als Hauptbestandteile umfasst:

ein wässriges Polyurethanharz (A), das ein Polyurethanharz mit einer Säuregruppe und eine Polyaminverbindung beinhaltet;

ein wasserlösliches Polymer (B), das Polyvinylalkohol ist;

ein anorganisches Schichtmineral (C); und

eine multifunktionelle Epoxyverbindung, wobei

das Massenverhältnis des wässrigen Polyurethanharzes (A) zu dem Polyvinylalkohol in einem festen Anteil 85/15 bis 10/90 beträgt,

die multifunktionelle Epoxyverbindung keine Isocyanatgruppe aufweist, und

das Wasserlöslichkeitsverhältnis der Verbindung (D) unter 25°C 60 Masse-% oder mehr beträgt, wobei das Wasserlöslichkeitsverhältnis wie hierin beschrieben bestimmt wird.

**5.** Beschichtungsmittel nach Anspruch 4,

wobei das anorganische Schichtmineral (C) ein Tonmineral auf Smektitbasis wie z.B. ein Montmorillonit oder ein Tonmineral auf Glimmerbasis ist.

**6.** Beschichtungsmittel nach Anspruch 4 oder 5,

wobei die multifunktionelle Epoxyverbindung zumindest eine ist, ausgewählt aus der Gruppe bestehend aus Hydrochinondiglycidylether, Resorcindiglycidylether, Ethylenglykoldiglycidylether, Polyethylenglykoldiglycidylether, Cyclohexendioldiglycidylether, Cyclohexandimethanoldiglycidylether, Dicyclopentadiendioldiglycidylether, Sorbit-Polyglycidylether, Polyglycerin-Polyglycidylether, Trimethylolpropantriglycidylether, Pentaerythrit-Tetraglycidylether, Epoxyharze vom Phenol-Novolak-Typ, Epoxyharze vom Kresol-Novolak-Typ und epoxidiertes Polybutadien.

**7.** Gassperrfilm, umfassend:

einen aus einem Kunststoffmaterial gebildete Grundfilm; und

einen Beschichtungsfilm, der auf mindestens eine Oberfläche des Grundfilms laminiert ist, wobei der Beschichtungsfilm aus dem Beschichtungsmittel nach einem der Ansprüche 4 bis 6 gebildet ist.

**Revendications**

**1.** Agent de revêtement, comprenant, en tant que composants principaux :

une résine de polyuréthane aqueuse (A) comprenant une résine de polyuréthane possédant un groupe de type acide et un composé de type polyamine ;

un polymère soluble dans l'eau (B) qui est un poly(alcool vinylique) ;

un minéral stratifié inorganique (C) ; et

un composé (D) qui est un composé de type époxy monofonctionnel autre qu'un agent de couplage de silane, un rapport en masse de la résine de polyuréthane aqueuse (A) sur le poly(alcool vinylique) en une teneur en solides étant de 85/15 à 10/90,

le composé (D) ne possédant pas un groupe isocyanate, et

un taux de solubilité dans l'eau du composé (D) à 25 °C étant de 60 % en masse ou plus, le taux de solubilité dans l'eau étant déterminé comme décrit ici.

**2.** Agent de revêtement selon la revendication 1, le composé(D) étant au moins l'un choisi dans le groupe constitué par l'éther de phényle et de glycidyle, l'éther de 2-éthylhexyle et de glycidyle, l'éther d'éthyle de diéthylène glycol et de glycidyle, l'éther de dicyclopentadiène et de glycidyle, et l'éther de 2-hydroxyéthyle et de glycidyle.

**3.** Film barrière aux gaz, comprenant :

un film de base formé d'une matière plastique ; et

un film de revêtement qui est stratifié sur au moins une surface du film de base, le film de revêtement étant formé de l'agent de revêtement selon la revendication 1 ou 2.

**4.** Agent de revêtement, comprenant, en tant que composants principaux :

une résine de polyuréthane aqueuse (A) comprenant une résine de polyuréthane possédant un groupe de type acide et un composé de type polyamine ;

un polymère soluble dans l'eau (B) qui est un poly(alcool vinylique) ;

un minéral stratifié inorganique (C) ; et

un composé de type époxy multifonctionnel,

un rapport en masse de la résine de polyuréthane aqueuse (A) sur le poly(alcool vinylique) en une teneur en solides étant de 85/15 à 10/90,

le composé de type époxy multifonctionnel ne possédant pas un groupe isocyanate, et

un taux de solubilité dans l'eau du composé (D) à 25 °C étant de 60 % en masse ou plus, le taux de solubilité dans l'eau étant déterminé comme décrit ici.

**5.** Agent de revêtement selon la revendication 4,

le minéral stratifié inorganique (C) étant un minéral de type argile à base de smectite tel qu'une montmorillonite ou un minéral de type argile à base de mica.

**6.** Agent de revêtement selon la revendication 4 ou 5,

le composé de type époxy multifonctionnel étant au moins l'un choisi dans le groupe constitué par l'éther d'hydroquinone et de diglycidyle, l'éther de résorcinol et de diglycidyle, l'éther d'éthylène glycol et de diglycidyle, un éther de polyéthylène glycol et de diglycidyle, l'éther de cyclohexène diol et de diglycidyle, l'éther de cyclohexanediméthanol et de diglycidyle, l'éther de dicyclopentadiène diol et de diglycidyle, un éther de sorbitol et de polyglycidyle, un éther de polyglycérol et de polyglycidyle, l'éther de triméthylolpropane et de triglycidyle, l'éther de pentaérythritol et de tétraglycidyle, des résines époxy de type phénol novolac, des résines époxy de type crésol novolac, et un polybutadiène époxydé.

**7.** Film barrière aux gaz, comprenant :

un film de base formé d'une matière plastique ; et

un film de revêtement qui est stratifié sur au moins une surface du film de base, le film de revêtement étant formé de l'agent de revêtement selon l'une quelconque des revendications 4 à 6.

**EP 3 287 500 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2001287294 A
- JP H11165369 A
- JP H693133 A
- JP H9150484 A
- JP 3764109 B
- JP 4524463 B
- JP 3351208 B
- WO 2015029950 A1
- JP 2015044943 A
- WO 2014175277 A1